# EUROPÄISCHE PATENTANMELDUNG

(11) **EP 4 455 055 A1**
(43) Veröffentlichungstag der Anmeldung: **30.10.2024**
(21) Anmeldenummer: 24171926.9
(22) Anmeldetag: 23.04.2024
(51) Int. Cl.: B65G 1/04, B65G 1/06, B65G 1/127, B65G 1/137

(54) **LAGERSYSTEM ZUM EIN- UND AUSLAGERN VON ARTIKELN UND EIN VERFAHREN DAZU**

(30) Priorität: 28.04.2023 CH 4522023
(71) Anmelder: FERAG AG, 8340 Hinwil (CH)
(72) Erfinder: GIARRUSSO, Marco Antonio, 8340 Hinwil (CH)
(74) Vertreter: Frei Patent Attorneys

(57) **Zusammenfassung**

Die Erfindung betrifft ein Lagersystem (1) zum Ein- und Auslagern von Artikeln (2), enthaltend eine Lageranlage (10) zum Lagern von Artikeln (2), umfassend mindestens eine Handhabungsvorrichtung (20) zur Entnahme von Artikeln (2) aus der Lageranlage (10), sowie enthaltend ein Regallager (50.1, 50.2) mit einem Lagerraum (55) mit einer Mehrzahl von vertikal übereinander angeordneten Regalböden (51) mit Lagerplätzen (52) zum Ablegen und temporären Lagern von Artikeln (2), welche der Lageranlage (10) entnommen wurden.

## Beschreibung

Die vorliegende Erfindung liegt auf dem Gebiet der Intralogistik und betrifft ein Lagersystem zum Ein- und Auslagern von Artikeln, enthaltend eine Lageranlage zum Lagern von Artikeln mit mindestens einer Handhabungsvorrichtung zur Entnahme von Artikeln aus der Lageranlage, sowie enthaltend ein Regallager mit einer Mehrzahl von vertikal übereinander angeordneten Regalböden zum Ablegen und temporären Lagern von Artikeln, welche der Lageranlage entnommen wurden.

Die Erfindung betrifft überdies ein Verfahren zum Entnehmen mindestens eines Artikels aus einer Lageranlage und zum Ablegen und temporären Lagern in einem Regallager.

Lageranlagen dienen der Lagerung von Artikeln bis diese z. B. aufgrund einer Kundenbestellung abgerufen und aus der Lageranlage wieder entnommen werden. In einer solchen Lageranlage können mehrere Zehntausend Artikel lagern, welche stets abrufbereit sein müssen. Andererseits sollen solche Lageranlagen möglichst kompakt aufgebaut sein und Platz für möglichst viele Artikel bieten. Ferner sollen solche Lageranlagen technisch auch möglichst einfach aufgebaut sein, so dass die Lageranlage wenig Unterhalt erfordert und nicht störungsanfällig ist. Solche Lageranlagen sind in der Regel dynamische Lager, in welchen die Artikel über die Lagerdauer keinen fest zugeordneten Lagerplatz haben.

So sind beispielsweise Kompaktlageranlagen bekannt, bei welchen Stapel von Lagerbehältern innerhalb einer Rahmenstruktur angeordnet werden. Die Rahmenstruktur enthält Vertikalelemente und bildet eine Mehrzahl von so genannten Lagersäulen aus, in welchen jeweils ein Stapel von Lagerbehältern gelagert werden können. Die Lagersäulen entsprechen also Lagerplätzen für säulenartig übereinander gestapelte Lagerbehälter. In den Lagerbehälter können wiederum ein oder mehrere Artikel, das eigentliche Lagergut, gelagert sein.

Der Zugriff auf die eingelagerten Lagerbehälter erfolgt über ein Behälterhandhabungsfahrzeug, das auf der Oberseite der Rahmenstruktur angeordnet ist und über Führungsschienen auf der Rahmenstruktur bewegbar ist. Zur Entnahme eines bestimmten Behälters aus einer Lagersäule wird das Behälterhandhabungsfahrzeug über die betreffende Lagersäule bewegt. Das Behälterhandhabungsfahrzeug hebt anschliessend einzelne Lagerbehälter vom Stapel ab, bis dieses Zugriff auf den zu entnehmenden Behälter erhält und entnimmt diesen aus der Lagersäule.

Hierzu kann das Behälterhandhabungsfahrzeug Lagerbehälter in andere Lagersäulen umstapeln, bis dieses den Lagerbehälter mit dem gewünschten Artikel aus der Lagersäule entnehmen kann. Entsprechend handelt es sich hier um ein dynamisches Lager, in welchem die Lagerbehälter keinen festen Lagerplatz zugewiesen bekommen. In der Regel sind auf der Rahmenstruktur zur Erhöhung der Verarbeitungskapazität mehrere individuell betreibbare Behälterhandhabungsfahrzeug angeordnet.

Solche Lageranlagen sind beispielsweise in den Publikationen WO 2021/197681 A1, WO 2021/197942 A1 und WO 2022/013365 A1 beschrieben.

Diese Lageranlagen sind einfach in ihrem Aufbau und sehr kompakt. Sie weisen jedoch den Nachteil auf, dass die Einlagerung und Auslagerung von Artikeln vergleichsweise viel Zeit in Anspruch nimmt und solche Anlagen daher zum Kommissionieren von Artikeln nicht besonders gut geeignet sind. Selbst wenn mehrere Behälterhandhabungsfahrzeuge eingesetzt werden, so können sich diese beim Aus- und Einlagern von Artikeln bzw. Lagerbehältern gegenseitig behindern, weshalb die Verarbeitungskapazität begrenzt ist.

Es ist daher eine **Aufgabe** vorliegender Erfindung ein Lagersystem vorzuschlagen, welches eine Kompaktlageranlage mit hoher Lagerkapazität umfasst, und welches dennoch ein effizientes und schnelles Bereitstellen bzw. Kommissionieren von Artikeln erlaubt.

Ferner soll das Lagersystem es ermöglichen, das Einlagern von Artikeln in die Lageranlage vom Bereitstellen bzw. Kommissionieren von Artikeln aus der Lageranlage zeitlich zu trennen.

Wenigstens eine Aufgabe wird mit den Merkmalen der unabhängigen Ansprüche 1 und 15 gelöst. Die abhängigen Ansprüche sowie die Beschreibung und die Figuren beinhalten besondere Ausführungsformen und Weiterbildungen der Erfindung.

Die Erfindung betrifft also ein Lagersystem zum Ein- und Auslagern von Artikeln, enthaltend:
- eine Lageranlage zum insbesondere kompakten Lagern von Artikeln mit mindestens einer Handhabungsvorrichtung zur Entnahme von Artikeln aus der Lageranlage;
- ein Regallager mit einer Mehrzahl von vertikal übereinander angeordneten Regalböden zum Ablegen und temporären Lagern von der Lageranlage entnommenen Artikeln.

Die der Lageranlage entnommenen Artikel werden von der Handhabungsvorrichtung zum Regallager transportiert, und insbesondere in Lagerbehältern zum Regallager transportiert.

Das Auslagern von Artikeln kann insbesondere ein Bereitstellen, und gegebenenfalls auch Kommissionieren von Artikeln umfassen.

Das Lagersystem umfasst insbesondere ein Lagerverwaltungssystem mit einer Anlagensteuerung zur Steuerung der aktiven Komponenten der Lageranlage zwecks Ein- und Auslagerung von Artikeln. Die zu steuernden, aktiven Komponenten sind beispielsweise die Handhabungsvorrichtung und gegebenenfalls eine Handlingeinrichtung, ein Lagerlift oder ein Umlaufantrieb (Paternoster) des Regallagers.

Die Handhabungsvorrichtung der Lageranlage ist insbesondere über die Anlagensteuerung autonom betreibbar. Die Handhabungsvorrichtung ist insbesondere ein durch die Anlagensteuerung gesteuerter Transportroboter.

Die Anlagensteuerung kann als zentrale Steuerung ausgelegt sein. Die Anlagensteuerung kann auch als dezentrale Steuerung ausgelegt sein, gemäss welcher z. B. die aktiven Komponenten oder die einzelnen Teile des Lagersystems wie Lageranlage und Regallager eigenständige Steuerungseinheiten aufweisen, welche jedoch an eine zentrale Steuerungseinheit angebunden sein.

Die Lageranlage bildet insbesondere einen Lageraufnahmeraum zur Lagerung von Artikeln aus. Die Lageranlage ist insbesondere ein dynamisches Lager bzw. zur dynamischen Lagerhaltung ausgelegt. Bei einem dynamischen Lager bzw. bei einer dynamischen Lagerhalterung wird dem einzulagernden Artikel bzw. einer den Artikeln enthaltenden Lagerbehälter kein fester Lagerplatz zugewiesen. Der Artikel bzw. der Lagerbehälter wird vielmehr auf einen beliebigen, gerade nicht belegten Lagerplatz, eingelagert und kann während der Lagerzeit auch auf einen anderen Lagerplatz umgelagert werden.

Gemäss einer besonderen Ausführungsform ist die Lageranlage zur Lagerung der Artikel in Lagerbehältern ausgelegt. In den Lagerbehältern können jeweils ein oder mehrere Artikel, also das eigentliche Lagergut, gelagert sein. Die Artikel innerhalb eines Lagerbehälters können je nach Anwendung identisch oder von unterschiedlichem Produkttyp sein.

Die Lagerbehälter können von identischer Form und Grösse sein. Die Lagerbehälter können auch eine identische Grundfläche, jedoch unterschiedliche Höhen aufweisen.

Gemäss einer besonderen Ausführung einer Lageranlage werden die Lagerbehälter mit den darin abgelegten Artikeln in Stapeln gelagert werden. Eine solche Lageranlage wird auch Vertikallager genannt.

Die Stapel von Lagerbehälter sind insbesondere säulenförmig. Da es sich hier um eine äussert kompakte Art von Lagerung handelt, werden solche Anlagen auch Kompaktlageranlagen genannt.

So kann die Lageranlage eine Mehrzahl von insbesondere nebeneinander angeordneten Lagersäulen zur Aufnahme und Einlagerung von übereinander gestapelten Lagerbehältern ausbilden. Die Lagersäulen entsprechen also Lagerplätzen für säulenartig übereinander gestapelte Lagerbehälter. Die Mehrzahl von Lagersäulen sind insbesondere nebeneinander in Reihen und Kolonnen angeordnet.

Hierzu kann die Lageranlage insbesondere eine Behälterlagerungseinrichtung aufweisen, welche die Lagersäulen ausbildet. Die Behälterlagerungseinrichtung umfasst bzw. ist insbesondere eine Rahmenstruktur.

Die Behälterlagerungseinrichtung kann Vertikalelemente umfassen, welche die Lagersäulen räumlich begrenzen. Die Vertikalelemente können durch Horizontalelemente miteinander verbunden sein.

Die Vertikalelemente können z. B. Profile, wie Metallprofile, umfassen bzw. aus solchen bestehen. Die Horizontalelemente können z. B. Profile, wie Metallprofile umfassen bzw. aus solchen bestehen.

Die Behälterlagerungseinrichtung der Lageranlage ist insbesondere so ausgebildet, dass diese eine horizontale Bewegung der Behälterstapel in den Lagersäulen verhindert und eine vertikale Bewegung der Lagerbehälter erlaubt.

So beschreiben beispielsweise die Publikationen WO 2021/197681 A1, WO 2021/197942 A1 und WO 2022/013365 A1 Lageranlagen mit Behälterlagerungseinrichtungen der oben beschriebenen Art.

Die Handhabungsvorrichtung einer solchen Lageranlage ist insbesondere als Behälterhandhabungsvorrichtung zur Entnahme von Lagerbehältern von oben aus den Lagersäulen ausgebildet. Die Behälterhandhabungsvorrichtung ist insbesondere oberhalb der Behälterlagerungseinrichtung, insbesondere oberhalb der Rahmenstruktur angeordnet. Die Behälterhandhabungsvorrichtung kann z. B. auf der Oberseite der Behälterlagerungseinrichtung, insbesondere auf der Oberseite der Rahmenstruktur angeordnet sein.

Die Handhabungsvorrichtung kann ein Erfassungs- und Haltewerkzeug zum Erfassen und Halten mindestens eines Artikels bzw. Lagerbehälters, insbesondere mit mindestens einem darin enthaltenen Artikel, enthalten. Das Erfassungs- und Haltewerkzeug kann z. B. ein Greifer- oder Klemmwerkzeug sein oder ein solches umfassen. Es ist auch möglich, dass das Erfassungs- und Haltewerkzeug einen Magneten zum Erfassen und Halten der Lagerbehälter mittels Magnetkraft enthält. Andere gängige Erfassungs- und Haltemechanismen sind auch denkbar.

Das Erfassungs- und Haltewerkzeug kann zwecks Entnahme eines Lagerbehälters von einer Lagersäule z. B. über eine Seil- oder Bandführung in die Lagersäulen absenkbar sein. Die Seile bzw. Bänder der Führung können aus Stahl sein.

Die Lageranlage weist insbesondere eine oberhalb und ganz besondere auf der Oberseite der Behälterlagerungseinrichtung angeordnete Führungsvorrichtung mit mindestens einem Führungsorgan auf. Die Führungsvorrichtung dient dem Bewegen der Handhabungsvorrichtung auf der Oberseite der Behälterlagerungseinrichtung entlang des mindestens einen Führungsorgans.

Die Behälterhandhabungsvorrichtung kann gemäss einer bevorzugten Variante ein Behälterhandhabungsfahrzeug sein, welches entlang des mindestens einen Führungsorgans auf der Behälterlagerungseinrichtung bewegbar ist.

Das Behälterhandhabungsfahrzeug ist auf der Behälterlagerungseinrichtung insbesondere horizontal bewegbar. Das Behälterhandhabungsfahrzeug ist entlang des mindestens einen Führungsorgans insbesondere in eine erste Bewegungsrichtung sowie in eine zweite Bewegungsrichtung bewegbar, welche senkrecht zur ersten Bewegungsrichtung verläuft.

Das Behälterhandhabungsfahrzeug enthält insbesondere mindestens eine Laufrolle, über welche dieses auf der Behälterlagerungseinrichtung entlang des mindestens einen Führungsorgans bewegbar ist.

Das Behälterhandhabungsfahrzeug enthält insbesondere mehrere Laufrollen, wie vier oder acht Laufrollen. Enthält das Behälterhandhabungsfahrzeug acht Laufrollen, so ist z. B. ein erster Satz von vier Laufrollen zur Bewegung entlang einer ersten Bewegungsrichtung und ein zweiter Satz von vier Laufrollen zur Bewegung entlang einer zweiten Bewegungsrichtung ausgelegt. Die Sätze von Laufrollen können insbesondere individuell zu- und weggeschaltet werden. Die Laufrollen können z. B. als Räder ausgebildet sein.

Das Behälterhandhabungsfahrzeug umfasst insbesondere einen Grundkörper mit den Laufrollen. Das Erfassungs- und Haltewerkzeug und der Behälteraufnahmeraum sind insbesondere am bzw. im Grundkörper angeordnet. Das Erfassungs- und Haltewerkzeug mit dem Behälteraufnahmeraum können auch dem Grundkörper, insbesondere in Bewegungsrichtung vorgelagert angeordnet sein.

Das mindestens eine Führungsorgan ist insbesondere eine Führungsschiene.

Das Behälterhandhabungsfahrzeug bewegt sich über die mindestens eine Laufrolle bzw. über die Laufrollen entlang der mindestens einen Führungsschiene bzw. rollt über die mindestens eine Laufrolle bzw. über die Laufrollen entlang der mindestens einen Führungsschiene.

Gemäss einer Weiterbildung rollt das mindestens eine Behälterhandhabungsfahrzeugs entlang einer Paarung von Führungsschienen ab. Die Führungsschienen einer solchen Paarung verlaufen insbesondere seitlich der Lagersäulen, so dass das Behälterhandhabungsfahrzeug entlang der Paarung von Führungsschienen zwecks Entnahme von Lagerbehältern über den Lagersäulen platzierbar ist.

Zum Bewegen des mindestens einen Behälterhandhabungsfahrzeug in die erste und zweite Bewegungsrichtung sind die Führungsschienen bzw. Paarungen von Führungsschienen insbesondere in einem Gittermuster, d.h. insbesondere sich im rechten Winkel kreuzend auf der Behälterlagerungseinrichtung, bzw. auf der Rahmenstruktur angeordnet. Die Führungsschienen fassen dabei die Lagersäulen auf der Oberseite der Behältereinlagerungseinrichtung seitlich ein.

Behälterhandhabungsfahrzeuge sowie Führungsvorrichtungen der oben beschriebenen Art werden z. B. in den Publikationen WO 2021/197681 A1, WO 2021/197942 A1 und WO 2022/013365 A1 beschrieben.

Gemäss einer Variante ist die Handhabungsvorrichtung bzw. die Behälterhandhabungsvorrichtung der Lageranlage ein Portalroboter, welcher über eine oberhalb des Lagerraumes angeordneten Portalstruktur geführt bewegbar ist. Die Portalstruktur kann zum Beispiel ein Portalgestell sein. Der Portalroboter ist entsprechend ebenfalls oberhalb des Lagerraumes der Lageranlage angeordnet. Der Portalroboter ist insbesondere in zwei in einem rechten Winkel zueinander stehenden Richtungen oberhalb des Lagerraumes der Lageranlage bzw. der Behältereinlagerungseinrichtung horizontal bewegbar. Ein solcher Portalroboter wird beispielsweise in der Publikation EP 3919 415 A1 beschrieben.

Der Zugriff zu den in den Lagersäulen gelagerten Lagerbehältern erfolgt über die mindestens eine Behälterhandhabungsvorrichtung. Die Lagerbehälter werden mittels der mindestens eine Behälterhandhabungsvorrichtung aus den Lagersäulen herausgehoben. Hierzu stapelt die mindestens eine Behälterhandhabungsvorrichtung beispielsweise die Lagerbehälter einer Lagersäule in andere Lagersäulen um, bis dieses den Lagerbehälter mit dem gewünschten Artikel aus der betreffenden Lagersäule entnehmen kann. Daher wird ein solches Lager auch als dynamisches Lager bezeichnet.

Gemäss einer weiteren Ausführung ist die Lageranlage als Horizontallager ausgebildet. Die Lageranlage enthält eine Mehrzahl von übereinander angeordneten Regalebenen, welche Lagerplätze zum Einlagern von Artikeln ausbilden. Jede Regalebene enthält mehrere, voneinander beabstandete, längslaufende Regalreihen, welche jeweils eine Ablage, insbesondere eine Ablagefläche zum Ablegen und Einlagern von Artikeln ausbilden. Die Ablage kann durch Regalböden, welche Ablageflächen ausbilden, ausgebildet sein. Die Artikel können direkt auf der Ablage der Regalreihen abgelegt sein oder in Lagerbehältern untergebracht sein, welche auf der Ablage abgelegt sind.

Die Lageranlage weist ferner seitlich von den längslaufenden Regalreihen und insbesondere zwischen den Regalreihen einer Regalebene angeordnete, längslaufende Transportgassen auf, entlang welchen Handhabungsvorrichtungen Artikel zwecks Einlagerung zu den Regalreihen hin transportieren oder zwecks Auslagerung von den Regalreihen weg transportieren können.

Die Lageranlage weist entsprechend eine Mehrzahl von nebeneinander auf einer Regalebene sowie übereinander und voneinander beabstandet angeordnete Transportgassen auf.

Die Regalreihe und entsprechend auch die Transportgassen laufen jeweils insbesondere parallel zueinander. Die Regalreihen bzw. Regalebenen und somit auch die Transportgassen verlaufen insbesondere horizontal. Entsprechend bewegen sich die Handhabungsvorrichtungen horizontal entlang der Transportgassen.

Jeder Transportgasse ist insbesondere mindestens ein Handhabungsvorrichtung zugeordnet. Allerdings kann vorgesehen sein, dass die Handhabungsvorrichtungen zwischen einzelnen Transportgassen wechseln können, insbesondere in vertikaler Richtung zwischen den Regalebenen. Auf diese Weise braucht nicht in jeder Transportgasse jeweils eine Handhabungsvorrichtung angeordnet zu sein.

Das nachfolgend noch näher beschriebene Regallager ist seitlich vom Horizontallager an den Stirnenden der Transportgassen angeordnet. Das Regallager kann wie nachfolgend noch beschrieben ausgebildet sein, jedoch mit der Besonderheit, dass auf der Regalseite, welche dem Horizontallager zugewandt ist, mehrere übereinander sowie nebeneinander angeordnete Übergabeeinrichtungen mit entsprechenden Übergabeöffnungen angeordnet sind.

Die Übergabeöffnungen an der Regalseite fluchten mit den Transportgassen der Lageranlage. So ist insbesondere jeder Transportgasse eine Übergabeeinrichtung mit Übergabeöffnung zugeordnet.

Auf diese Weise können die Handhabungsvorrichtungen der übereinander und nebeneinander angeordneten Transportgassen zwecks Übergabe von Artikeln jeweils entlang der Transportgasse zu einer Übergabeöffnung des Regallagers bewegt werden, insbesondere horizontal bewegt werden.

Die von der Handhabungsvorrichtung zur Übergabeöffnung transportierten Artikel werden entsprechend durch die Übergabeöffnungen an das Regallager übergeben. Die Übergabe der Artikel an das Regallager kann gemäss einem der nachfolgend noch beschriebenen Verfahren erfolgen. Entsprechend kann auch die Übergabeeinrichtung wie nachfolgend noch beschrieben ausgebildet sein.

Die Handhabungsvorrichtung ist hier insbesondere als Behälterhandhabungsvorrichtung zur Entnahme von Lagerbehältern mit darin untergebrachten Artikeln aus den Regalreihen ausgebildet.

Die Handhabungsvorrichtung kann ein Erfassungs- und Haltewerkzeug zum Erfassen und Halten mindestens eines Artikels bzw. Lagerbehälters, insbesondere mit mindestens einem darin enthaltenen Artikel, enthalten. Das Erfassungs- und Haltewerkzeug kann z. B. ein Greifer- oder Klemmwerkzeug sein oder ein solches umfassen. Es ist auch möglich, dass das Erfassungs- und Haltewerkzeug einen Magneten zum Erfassen und Halten der Lagerbehälter mittels Magnetkraft enthält. Andere gängige Erfassungs- und Haltemechanismen sind auch denkbar.

Die Handhabungsvorrichtung wird in den Transportgassen insbesondere entlang einer Führungsvorrichtung bewegt. Die Führungsvorrichtung kann mindestens ein Führungsorgan, wie Führungsschiene umfassen.

Die Handhabungsvorrichtung kann insbesondere ein Handhabungsfahrzeug sein, welches mindestens eine Laufrolle, wie Rad, aufweist. Das Handhabungsfahrzeug kann über die mindestens eine Laufrolle entlang der mindestens einen Führungsschiene rollend bewegt werden. Die Handhabungsvorrichtung ist insbesondere ein Behälterhandhabungsfahrzeug.

So beschreiben beispielsweise die Publikationen DE 10 2021 129 397 B3 und EP 4 125 016 A1 Horizontallager der oben beschriebenen Art.

Das Regallager schliesst seitlich an die Lageranlage, insbesondere unmittelbar an die Lageranlage an.

Das Regallager dient insbesondere als temporäres Lager für Artikel, welche aus der Lageranlage entnommen werden. So werden beispielsweise Artikel aufgrund vorliegender Kundenbestellungen mittels der Handhabungsvorrichtung aus der Lageranlage entnommen und an das Regallager übergeben und bis zum Abruf durch das Lagerverwaltungssystem in diesem temporär zwischengelagert. Bei Abruf durch das Lagerverwaltungssystem werden die Artikel aus dem Regallager ausgelagert bzw. herausgegeben.

Das Regallager ist insbesondere ein Hochregallager.

Das Regallager bildet insbesondere einen Lagerraum aus, in welchem die Regalböden in einer Regalablage angeordnet sind. Das Regallager weist insbesondere Regalseiten auf, welche das Regallager bzw. dessen Lagerraum mit den Regalböden nach aussen begrenzen. Die Regalseiten können durch Regalwände bzw. Seitenwände nach aussen abgeschlossen sein. Die Regalseiten können gegen aussen auch partiell, z. B. über Öffnungen, oder vollständig offen sein.

Das Regallager ist gegen oben insbesondere durch eine Regaldecke geschlossen.

Das Regallager weist insbesondere eine rechteckförmige Grundfläche auf. Entsprechend kann das Regallager vier im rechten Winkel zueinander angeordnete Regalseiten aufweisen.

Das Regallager kann insbesondere ein, mit Ausnahme von einzelnen Öffnungen, wie mindestens einer Übergabeöffnung bzw. Ausgabeöffnung, umfänglich geschlossenes Gehäuse aufweisen.

Das Regallager zeichnet sich insbesondere dadurch aus, dass dieses höher ist als die Lageranlage. Das heisst, die maximale Lagerhöhe des Regallagers ist grösser als die maximale Lagerhöhe der Lageranlage. Die Lagerhöhe bezeichnet jene Höhe, bis zu welcher Artikel eingelagert werden.

Das Regallager kann insbesondere in Silobauweise ausgelegt sein und eine Höhe aufweisen, welche wesentlich grösser ist als die Breite und Länge seiner Grundfläche. Seine Höhe kann z. B. dreimal oder mehr als dreimal grösser sein als die Breite und die Länge seiner Grundfläche.

Die Regalböden bilden in der Lagerposition im Lagerraum eine Regalablage aus. Die Regalablage umfasst insbesondere mindestens eine Regalreihe aus einer Mehrzahl von vertikal übereinander angeordneten Regalböden.

Das Regallager kann insbesondere zwei über einen vertikalen Zwischenraum, wie Schacht, voneinander beabstandet nebeneinander angeordnete Regalreihen aufweisen. Die beiden Regalreihen sind jeweils insbesondere an einander gegenüberliegenden Wänden des Regallagers angeordnet. Im vertikalen Zwischenraum kann insbesondere mindestens ein Lagerlift angeordnet sein.

Die Regalböden bilden insbesondere Lagerplätze für die Artikel aus. Die Regalböden können z. B. als Tablare ausgebildet sein. Die Regalböden bzw. Tablare können z. B. seitliche Randerhöhungen aufweisen, welche ein seitliches Abgleiten von Artikeln bzw. Lagerbehälter verhindern.

Die Regalböden können die Artikel direkt aufnehmen. Ein Regalboden bildet insbesondere mehrere Lagerplätze für Artikel aus. Ein Lagerplatz kann zur Aufnahme eines einzigen Artikels oder zur Aufnahme von Gruppen von Artikeln, insbesondere von kommissionierten Artikeln ausgelegt sein.

Alternativ oder zusätzlich können die Regalböden auch Lagerbehälter mit den darin angeordneten Artikeln aufnehmen. Ein Regalboden bildet insbesondere mehrere Lagerplätze für jeweils einen Lagerbehälter aus.

Die Regalböden können jeweils Fächer ausbilden, welche insbesondere jeweils einem Lagerplatz entsprechen. Die Fächer können z. B. Vertiefungen im Regalböden sein. Die Fächer können z. B. jeweils durch einen umlaufenden Rand im Regalboden ausgebildet sein.

Die Lagerplätze bzw. die Fächer können mittels Markierungen, wie Farbmarkierungen, markiert sein. Die Markierungen können z. B. dazu vorgesehen sein, von einer optischen Erfassungsvorrichtung ausgelesen und von einer Auswertevorrichtung ausgewertet zu werden. Die Markierungen dienen insbesondere zur Orientierung der Handlingeinrichtung entlang der Regalböden. So kann die Handlingeinrichtung z. B. anhand der Markierungen die genaue Position eines Lagerplatzes bzw. eines freien Lagerplatzes auf dem Regalboden erfassen. Die optische Erfassungsvorrichtung und gegebenenfalls auch die Auswertevorrichtung sind insbesondere auf der Handlingeinrichtung angeordnet.

Das Regallager ist insbesondere mit individuell bewegbaren und in einer Lagerposition im Lagerraum, z. B. an einer Haltestruktur, anbringbaren, insbesondere befestigbaren Regalböden ausgestattet. Die Regalböden können insbesondere aus ihrer Halterung in der Lagerposition gelöst und aus der Regalablage wegbewegt werden, z. B. um diese mit Artikeln zu bestücken, oder um von diesen Artikel zu entnehmen. Ebenso können die Regalböden insbesondere zur Regalablage bewegt und in Halterung in einer Lagerposition gebracht werden.

Die Regalböden erstrecken sich jeweils insbesondere über die gesamte Länge des Regallagers.

Gemäss einer ersten Ausführungsform enthält das Regallager mindestens einen Lagerlift für den vertikalen Transport von Artikeln zum Zwecke der Einlagerung bzw. Auslagerung von Artikeln. Mittels Lagerlift können die Artikel zur Regalablage bzw. zu Lagerplätzen auf Regalböden in der Regalablage hin bzw. von diesen weg transportiert werden.

Der mindestens eine Lagerlift ist insbesondere im Lagerraum des Regallagers angeordnet. Der mindestens eine Lagerlift ist insbesondere ein Vertikallift.

Der mindestens eine Lagerlift dient insbesondere zum Transportieren von Artikeln zur Regalablage bzw. zu Lagerplätzen auf Regalböden in der Regalablage im Lagerraum des Regallagers, z.B. von Artikeln, welche von der Handhabungsvorrichtung dem Regallager übergeben wurden.

Der mindestens eine Lagerlift dient insbesondere auch zum Wegtransportieren von Artikeln von der Regalablage bzw. von Lagerplätzen auf Regalböden in der Regalablage weg, z. B. zu einer Auslagerstation.

Der mindestens eine Lagerlift dient insbesondere auch zum Verschieben von Artikeln zwischen unterschiedlichen Lagerpositionen innerhalb der Regalablage des Regallagers.

Der mindestens eine Lagerlift enthält insbesondere mindestens ein vertikal bewegliches Transportorgan, über welches die Artikel vertikal transportierbar sind.

Der Lagerlift bzw. das Transportorgan kann dazu ausgelegt sein, Artikel (als solche) vertikal zu transportieren. So kann der Transportlift Artikel zu Regalböden im Lagerraum hin oder von Regalböden weg transportieren. Der Transportlift kann auch Regalböden mit darauf abgelegten Artikeln zu einer Lagerposition in der Regalablage hin oder aus einer Lagerposition weg transportieren.

Der Lagerlift bzw. das Transportorgan kann dazu ausgelegt sein, Lagerbehälter mit darin abgelegten Artikeln vertikal zu transportieren. So kann der Lagerlift Lagerbehälter mit darin abgelegten Artikeln zu Regalböden im Lagerraum hin oder von Regalböden weg transportieren. Der Transportlift kann auch Regalböden mit darauf abgelegten Lagerbehältern mit Artikeln zu einer Lagerposition in der Regalablage hin oder aus einer Lagerposition weg transportieren.

Der Lagerlift bzw. das Transportorgan ist insbesondere dazu ausgelegt, Regalböden mit darauf abgelegten Artikeln bzw. Lagerbehältern oder leere Regalböden vertikal zu transportieren. So kann der Transportlift Regalböden mit darauf abgelegten Artikeln bzw. Lagerbehältern oder leere Regalböden vertikal zu einer Lagerposition hin oder vertikal von einer Lagerposition weg transportieren.

Der Lagerlift kann mindestens eine sich vertikal erstreckende Führungsstruktur, wie Liftsäule bzw. Liftmast aufweisen, entlang welcher das Transportorgan über einen Antrieb vertikal bewegbar geführt ist. Idealerweise weist der Lagerlift mindestens zwei in Längsrichtung des Regallagers bzw. der Regalböden voneinander beabstandet angeordnete Führungsstrukturen, wie Liftsäulen bzw. Liftmasten auf. Die Führungsstrukturen können insbesondere jeweils im Bereich der Endabschnitte der Regalböden angeordnet sein. Das mindestens eine Transportorgan ist entlang der mindestens zwei Führungsstrukturen vertikal geführt.

Gemäss einer besonderen Ausführungsform enthält das Regallager zwei Lagerlifte mit jeweils mindestens einem Transportorgan. Dadurch wird eine höhere Arbeitsleistung bei der Ein- und Auslagerung von Artikeln erzielt. So kann jeder Lagerlift jeweils eine Regalreihe bedienen.

Das Lagersystem und insbesondere das Regallager weist insbesondere mindestens eine Übergabeeinrichtung zur Übergabe von Artikeln, welche mittels der Handhabungsvorrichtung der Lageranlage entnommen wurden, von der Seite an das Regallager auf. Die mindestens eine Übergabevorrichtung ist mit Bezug auf das Regallager seitlich, d.h. im Bereich einer Regalseite angeordnet.

Die mindestens eine Übergabeeinrichtung umfasst insbesondere eine seitliche Übergabeöffnung im Regallager.

Die mindestens eine Übergabeöffnung ist in einer Regalseite bzw. Seitenwand des Regallagers angeordnet. Die Regalseite bzw. Seitenwand mit der Übergabeöffnung ist insbesondere zur Lageranlage hin ausgerichtet bzw. zu dieser benachbart.

Es kann sein, dass die betreffende Regalseite nach aussen offen ist, d.h. nicht durch eine Seitenwand abgeschlossen ist. In diesem Fall handelt es sich bei der Übergabeöffnung um eine virtuelle Übergabeöffnung, welche in der offenen Regalseite räumlich nur aufgrund ihrer Funktion nicht jedoch physisch begrenzt ist.

Handelt es sich bei der Lageranlage um ein Vertikallager, so ist die Übergabeeinrichtung bzw. deren Übergabeöffnung insbesondere auf Höhe der Oberseite der Lageranlage bzw. der Behälterlagerungseinrichtung angeordnet.

Die seitliche Übergabeöffnung ist insbesondere derart angeordnet sein, dass die Handhabungsvorrichtung zwecks Übergabe von Artikeln an das Regallager in einer horizontalen Bewegung zur seitlichen Übergabeöffnung hin und gegebenenfalls mindestens teilweise durch die seitliche Übergabeöffnung hindurch in die Übergabezone bewegt werden kann.

Das Regallager kann auch mehrere seitliche Übergabeeinrichtungen mit insbesondere jeweils einer seitlichen Übergabeöffnung aufweisen. Die Übergabeöffnungen sind insbesondere auf derselben Regalseite bzw. Seitenwand des Regallagers angeordnet. Die Übergabeöffnungen sind insbesondere voneinander beabstandet angeordnet.

Die Übergabeöffnungen können insbesondere auf derselben Ebene an der Regalseite angeordnet sein. Dies trifft insbesondere zu, wenn die Lageranlage ein Vertikallager, d.h. eine Kompaktlageranlage mit in Stapeln eingelagerten Lagerbehältern ist.

Handelt es sich bei der Lageranlage um ein Horizontallager, wie oben beschrieben, so können die Übergabeöffnungen auch übereinander auf verschiedenen Ebenen angeordnet sein. Es können insbesondere mehrere Übergabeöffnungen sowohl übereinander als auch nebeneinander auf derselben Regalseite angeordnet sein.

Die mindestens eine Übergabeeinrichtung bildet insbesondere eine Übergabezone zur seitlichen Übergabe von Artikeln von der Lageranlage an das Regallager aus.

Die Übergabezone kann ausserhalb des Regallagers, insbesondere unmittelbar vor einer Regalseite bzw. seitlichen Übergabeöffnung des Regallagers angeordnet sein.

Die Übergabezone kann innerhalb des Regallagers, insbesondere unmittelbar hinter einer Regalseite bzw. einer seitlichen Übergabeöffnung angeordnet sein.

Die Übergabeeinrichtung umfasst in der Übergabezone insbesondere eine Übergabeablage zum Ablegen von mindestens einem zu übergebenden Artikel zwecks Übergabe an das Regallager. Die Übergabeablage dient insbesondere zum Ablegen von mindestens einem Lagerbehälter, welcher mindestens einen zu übergebenden Artikel enthält.

Die Übergabeablage kann innerhalb des Regallagers, insbesondere unmittelbar hinter einer Regalseite bzw. einer Übergabeöffnung angeordnet sein.

Die Übergabeablage kann ein Auflageorgan für die Artikel bzw. Lagerbehälter umfassen. Das Auflageorgan kann durch einen Regalboden selbst ausgebildet werden.

Die Übergabeablage ist insbesondere unmittelbar neben und unterhalb der Übergabeöffnung angeordnet.

Die Übergabeablage ist insbesondere unterhalb der Übergabeposition der Handhabungsvorrichtung angeordnet. Dies erlaubt das Bewegen der Handhabungsvorrichtung z. B. entlang des mindestens einen Führungsorgans über die Übergabeablage in die Übergabeposition.

Die Übergabeablage ist hierzu insbesondere unterhalb der Führungsvorrichtung bzw. des mindestens eines Führungsorgans, wie Führungsschiene, der Handhabungsvorrichtung angeordnet.

Die Übergabeablage kann ausserhalb des Regallagers, insbesondere unmittelbar vor einer Regalseite bzw. einer Übergabeöffnung am Regallager angeordnet sein.

Das Lagersystem mit der Übergabeeinrichtung ist insbesondere so ausgelegt, dass die Handhabungsvorrichtung bzw. das Behälterhandhabungsfahrzeug zur Übergabeablage der Übergabeeinrichtung hin und insbesondere wenigstens teilweise und insbesondere vollständig über diese bewegbar ist.

Das Lagersystem mit der Übergabeeinrichtung ist insbesondere so ausgelegt, dass die Handhabungsvorrichtung bzw. das Behälterhandhabungsfahrzeug zur mindestens einen seitlich angeordneten Übergabeöffnung des Regallagers hin bewegbar ist.

Die Handhabungsvorrichtung nimmt in der Übergabeeinrichtung insbesondere eine Übergabeposition ein. Die Übergabeposition kann ausserhalb des Regallagers angeordnet sein. Die Übergabeposition kann im Regallager bzw. in dessen Lagerraum angeordnet sein.

Gemäss einer Ausführung ist die Handhabungsvorrichtung bzw. das Behälterhandhabungsfahrzeug mindestens teilweise und insbesondere vollständig durch die Regalseite bzw. durch die mindestens eine seitliche Übergabeöffnung seitlich in das Regallager bzw. in dessen Lagerraum in eine Übergabeposition bewegbar.

Das Lagersystem kann also dazu ausgelegt sein, die Artikel bzw. die Lagerbehälter mit den darin enthaltenen Artikeln mittels der Handhabungsvorrichtung durch eine Regalseite, insbesondere durch die mindestens eine seitliche Übergabeöffnung in das Regallager zu transportieren.

Das Lagersystem kann überdies dazu ausgelegt sein, die Artikel bzw. die Lagerbehälter mittels der Handhabungsvorrichtung auf einer Übergabeablage, insbesondere auf einem Regalboden, abzulegen.

Es kann vorgesehen sein, dass das mindestens eine Führungsorgan der Führungsvorrichtung durch die Regalseite, insbesondere durch die mindestens eine Übergabeöffnung in das Regallager hinein geführt ist.

Dadurch kann die Handhabungsvorrichtung, insbesondere das Behälterhandhabungsfahrzeug, entlang des mindestens einen Führungsorgans durch die Regalseite bzw. durch die mindestens eine Übergabeöffnung mindestens teilweise, insbesondere vollständig seitlich in das Regallager bzw. in dessen Lagerraum in eine Übergabeposition bewegt werden.

Gemäss einer weiteren Ausführung ist die Handhabungsvorrichtung bzw. das Behälterhandhabungsfahrzeug unmittelbar vor der Regalseite bzw. vor der seitlichen Übergabeöffnung in eine Übergabeposition bewegbar. Die Übergabeposition befindet sich insbesondere auf der bzw. in der Lageranlage.

Gemäss dieser Ausführung befindet sich die Übergabeablage ausserhalb des Regallagers. Die zu übergebenden Artikel bzw. die Lagerbehälter mit den zu übergebenden Artikeln werden insbesondere ausserhalb des Regallagers von der Handhabungsvorrichtung auf der Übergabeablage abgelegt. Erst in einem nachfolgenden Schritt werden die zu übergebenden Artikel, z. B. mittels einer Handlingeinrichtung des Regallagers, durch die Regalseite bzw. durch die Übergabeöffnung seitlich in das Regallager transportiert und insbesondere auf Regalböden abgelegt.

Das Regallager enthält insbesondere eine Auslagerstation zum Ausgeben von Artikeln aus dem Lagersystem.

An der Auslagerstation können die ausgegebenen Artikel z. B. an eine Wegfördereinrichtung übergeben werden. Die ausgegebenen Artikel können an der Auslagerstation auch von Bedienpersonal zur weiteren Verarbeitung entgegengenommen bzw. abgegriffen werden.

Die Artikel können an der Auslagerstation als solche ausgegeben werden. Die Artikel können in der Auslagerstation in Lagerbehältern ausgegeben werden. Die Artikel können in der Auslagerstation auf Regalböden ausgegeben werden.

Die Artikel können an der Auslagerstation an eine Wegfördereinrichtung bzw. auf ein Förderorgan, wie Förderschale, einer Wegförderreinrichtung ausgegeben werden. Das Ausgeben der Artikel kann vollautomatisch über die Anlagensteuerung, z. B. mittels einer Handlingeinrichtung, oder durch Bedienpersonal erfolgen.

Die Auslagerstation kann eine seitliche Ausgabeöffnung in einer Regalwand bzw. Seitenwand des Regallagers umfassen.

Die Auslagerstation bzw. deren seitliche Ausgabeöffnung kann an oder im Bereich der Basis des Regallagers, über welche das Regallager auf einer Unterlage, wie Boden, steht, angeordnet sein.

Gemäss einer bevorzugten Weiterbildung enthält das Regallager eine insbesondere im Lagerraum angeordnete Handlingeinrichtung zum Bewegen von mindestens einer der nachfolgend genannten Objektart, insbesondere innerhalb des Lagerraums des Regallagers:
- Artikel;
- Lagerbehälter, insbesondere mit darin enthaltenen Artikeln,
- individuell bewegbaren Regalböden, insbesondere mit darauf angeordneten Artikeln bzw. Lagerbehältern.

Die Handlingeinrichtung kann auch zum Bewegen von mindestens zwei der oben genannten Objektarten, wie Artikel und Lagerbehälter bzw. Artikel und Regalböden, oder von allen drei Objektarten ausgelegt sein.

Gemäss einer Ausführung ist das Lagersystem dazu ausgelegt, insbesondere mittels der Handhabungsvorrichtung, Lagerbehälter mit darin enthaltenen Artikeln aus der Lageranlage zu entnehmen und die Lagerbehälter mit den darin enthaltenen Artikeln, an das Regallager zu übergeben und auf Regalböden des Regallagers abzulegen bzw. einzulagern. Das Ablegen bzw. Einlagern erfolgt insbesondere mittels eines Lagerlift und gegebenenfalls auch mittels einer Handlingeinrichtung.

Gemäss einer weiteren Ausführung ist das Lagersystem dazu ausgelegt, insbesondere mittels der Handhabungsvorrichtung, Lagerbehälter mit darin enthaltenen Artikeln der Lageranlage zu entnehmen und, insbesondere mittels mindestens einer Handlingeinrichtung und gegebenenfalls eines Lagerlifts, einzelne Artikel aus den Lagerbehältern zu entnehmen und auf Regalböden des Regallagers abzulegen.

Es kann vorgesehen sein, dass die Lagerbehälter mit den darin verbleibenden Artikeln oder auch leere Lagerbehälter mittels der Handhabungsvorrichtung von der Übergabeeinrichtung wieder zurück in die Lageranlage transportiert werden.

Die Handlingeinrichtung ist insbesondere zum Wegbewegen von Artikeln aus der Übergabezone der Übergabeeinrichtung, insbesondere von einer Übergabeablage in der Übergabezone ausgelegt.

Die Handlingeinrichtung kann auch zum Bewegen von Artikeln in die Regalablage bzw. zu Lagerplätzen auf Regalböden in der Regalablage ausgelegt sein.

Die Handlingeinrichtung kann auch zum Wegbewegen von Artikeln aus der Regalablage bzw. von Lagerplätzen auf den Regalböden in der Regalablage ausgelegt sein.

Die Handlingeinrichtung kann auch zum Bewegen von Artikeln zu einer Auslagerstation im Regallagers ausgelegt sein.

Die Handlingeinrichtung kann insbesondere zum Bewegen von Artikeln auf ein Transportorgan eines Lagerlift ausgelegt sein. Die Handlingeinrichtung kann zum Bewegen von Artikeln aus der Übergabezone auf das Transportorgan ausgelegt sein. Die Handlingeinrichtung kann zum Bewegen von Artikeln aus der Regalablage bzw. von Lagerplätzen auf Regalböden in der Regalablage auf das Transportorgan ausgelegt sein.

Die Handlingeinrichtung kann insbesondere zum Wegbewegen von Artikeln von einem Transportorgan eines Lagerlift ausgelegt sein. Die Handlingeinrichtung kann zum Bewegen von Artikeln vom Transportorgan in die Regalablage, bzw. zu Lagerplätzen auf Regalböden in der Regalablage ausgelegt sein. Die Handlingeinrichtung kann zum Bewegen der Artikel vom Transportorgan an eine Auslagerstation ausgelegt sein.

Die Handlingeinrichtung kann insbesondere zum Entnehmen von Artikeln in der Übergabezone aus Lagerbehältern ausgelegt sein. Die Handlingeinrichtung kann insbesondere dazu ausgelegt sein, die aus den Lagerbehältern entnommenen Artikel wie folgt zu bewegen:
- auf das Transportorgan eines Lagerlifts;
- auf eine Kommissionierablage in einer Kommissionierzone.

Die Handlingeinrichtung kann die Artikel insbesondere auf einen Regalboden auf dem Transportorgan bzw. in der Kommissionierzone ablegen.

Die Handlingeinrichtung ist insbesondere ein durch die Anlagensteuerung gesteuerter Handlingroboter.

Es kann vorgesehen sein, dass das Regallager mehr als eine Handlingeinrichtung enthält, welche jeweils insbesondere unterschiedliche Funktionen erfüllen.

Die Handlingeinrichtung enthält insbesondere ein Erfassungs- und Haltewerkzeug zum Erfassen und Halten von mindestens einem Objekt der folgenden Objektart:
- Artikel;
- Lagerbehälter, insbesondere mit mindestens einem darin enthaltenen Artikel,
- individuell bewegbarer Regalboden, insbesondere mit mindestens einem darauf angeordneten Artikel.

Das Erfassungs- und Haltewerkzeug kann auch zum Erfassen und Halten von mindestens zwei der oben genannten Objektarten, wie Artikel und Lagerbehälter bzw. Artikel und Regalböden, oder von allen drei Objektarten ausgelegt sein.

Das Lagersystem zur Übernahme eines Artikels kann so ausgelegt sein, dass das Erfassungs- und Haltewerkzeug mindestens teilweise und insbesondere vollständig durch eine Regalseite, insbesondere durch die seitliche Übergabeöffnung hindurch in eine ausserhalb des Regallagers angeordneten Übergabezone bewegbar ist.

Das Erfassungs- und Haltewerkzeug kann z. B. ein Greifer- oder Klemmwerkzeug sein oder ein solches umfassen. Es ist auch möglich, dass das Erfassungs- und Haltewerkzeug einen Magneten zum Erfassen und Halten von Lagerbehälter oder Regalböden mittels Magnetkraft enthält. Andere gängige Erfassungs- und Haltemechanismen sind auch denkbar.

Die Handlingeinrichtung kann eine optische Erfassungsvorrichtung zum Erfassen der Artikel und zur Steuerung des Erfassungs- und Haltewerkzeug enthalten. Die optische Erfassungsvorrichtung ist mit einer Auswertevorrichtung zur Auswertung der optischen Signale verbunden. Die Auswertevorrichtung kann z. B. in der Handlingeinrichtung oder in der Anlagensteuerung angeordnet sein.

Dank der optischen Erfassungsvorrichtung und der mit dieser verbundenen Auswertevorrichtung kann das Erfassungs- und Haltewerkzeug mittels der Anlagensteuerung zielgerichtet Artikel erfassen und an einem Bestimmungsort wieder ablegen.

Das Erfassungs- und Haltewerkzeug ist insbesondere an einem bewegbaren Haltearm der Handlingeinrichtung angeordnet, insbesondere an dessen Ende. Der Haltearm kann ein Gelenkarm sein, welcher sich insbesondere in verschiedene Richtungen bewegen sowie gegebenenfalls ausstrecken und zurückziehen lässt.

Die Handlingeinrichtung kann eine Teleskopiereinrichtung, wie Teleskoparm, enthalten, an welcher das Erfassungs- und Haltewerkzeug angeordnet ist, und über welche das Erfassungs- und Haltewerkzeug (durch Teleskopieren der Teleskopiereinrichtung) ausgefahren und wieder zurückgezogen werden kann.

Das oben erwähnte Bewegen der Artikel durch die Handlingeinrichtung kann wie erwähnt durch direktes Erfassen und Halten der Artikel oder indirekt durch Erfassen und Halten der Lagerbehälters mit den darin enthaltenden Artikeln oder von individuell bewegbaren Regalböden mit darauf angeordneten Artikeln erfolgen.

Die Handlingeinrichtung kann derart ausgebildet und im bzw. am Regallager angeordnet sein, dass das Erfassungs- und Haltewerkzeug Artikel bzw. Lagerbehälter in einer Übergabezone ausserhalb des Regallagers erfassen und halten und durch die Regalseite bzw. durch die Übergabeöffnung in das Regallager bewegen kann.

Das Erfassungs- und Haltewerkzeug kann hierbei insbesondere mindestens teilweise oder vollständig durch die Regalseite bzw. die seitliche Übergabeöffnung hindurch in die ausserhalb des Regallagers angeordneten Übergabezone bewegbar sein.

Die Handlingeinrichtung kann insbesondere an einer Struktur der Regallagers angeordnet bzw. angebracht sein. Die Handlingeinrichtung kann insbesondere an einer Struktur der Regalseite, wie Seitenwand angeordnet bzw. angebracht sein.

Die Handlingeinrichtung kann am Lagerlift vertikal bewegbar angeordnet sein. Die Handlingeinrichtung kann insbesondere am Transportorgan eines Lagerlifts angeordnet bzw. angebracht und zusammen mit dem Transportorgan vertikal bewegbar sein. Die vertikal bewegbare Anordnung der Handlingeinrichtung am Lagerlift weist den Vorteil auf, dass die Handlingeinrichtung in jene Zonen bewegbar ist, in welchen Artikel übergeben werden. Entsprechend ist die Handlingeinrichtung dafür vorgesehen, Artikel zum Transportorgan des Lagerlifts hin oder vom Transportorgan des Lagerlifts weg zu bewegen. Die Handlingeinrichtung kann dabei die Artikel als solche oder Lagerbehälter mit darin abgelegten Artikeln oder Regalböden mit darauf abgelegten Artikeln bzw. Lagerbehälter bewegen.

Die Handlingeinrichtung kann auch über eine Führungsvorrichtung an der Struktur des Regallagers angeordnet bzw. angebracht sein.

Das Regallager kann eine Führungsvorrichtung mit mindestens einem Führungsorgan zum Bewegen der Handlingeinrichtung entlang des mindestens einen Führungsorgans aufweisen. Die Bewegung ist insbesondere eine lineare Bewegung. Die Bewegung kann insbesondere eine horizontale Bewegung sein. Die Bewegung kann auch eine vertikale Bewegung sein. Die Bewegung kann sowohl eine horizontale als auch vertikale Bewegung sein.

Die Führungsvorrichtung kann so angeordnet sein, dass sich die Handlingeinrichtung entlang des mindestens einen Führungsorgans der Führungsvorrichtung zur Übergabeöffnung hin und gegebenenfalls durch die Übergabeöffnung nach aussen bewegen lässt, derart dass das Erfassungs- und Haltewerkzeug Artikel bzw. Lagerbehälter in einer Übergabezone ausserhalb des Regallagers erfassen und halten und durch die Regalseite bzw. durch die Übergabeöffnung in das Regallager bewegen kann.

Die Führungsvorrichtung ist insbesondere so ausgelegt, dass die Handlingeinrichtung zur Übernahme eines Artikels entlang des mindestens einen Führungsorgans mindestens teilweise und insbesondere vollständig durch eine Regelseite, insbesondere durch die seitliche Übergabeöffnung hindurch in eine ausserhalb des Regallagers angeordneten Übergabezone bewegbar ist.

Das mindestens eine Führungsorgan kann eine Führungsschiene sein. Das Erfassungs- und Haltewerkzeug kann über einen Führungsschlitten entlang der mindestens einen Führungsschiene bewegbar sein.

Gemäss einer weiteren Ausführungsform ist das Regallager als vertikales Umlaufregal mit einer Mehrzahl von vertikal umlaufenden Regalböden ausgebildet. Der Umlauf der Regalböden erfolgt dabei insbesondere nach dem Paternoster-Prinzip. Daher werden solche Regallager auch Paternosterregallager genannt. Die Regalböden sind dabei durch ein Umlauforgan miteinander verbunden und bewegen sich folglich synchron miteinander in Umlaufrichtung.

Die Regalböden sind dabei insbesondere an der Übergabeeinrichtung vorbei oder zumindest in seiner Nähe vorbei bewegbar, derart dass Artikel durch die Handlingeinrichtung von der Übergabeeinrichtung bzw. von dessen Übergabezone auf einen vorbeibewegten Regalboden bewegt werden können. Der Umlauf der Regalböden kann für die Übergabe der Artikel auf den Regalboden auch gestoppt werden.

Das Regallager kann eine Kommissioniereinrichtung zum Kommissionieren von Artikeln aufweisen. Die Kommissioniereinrichtung kann eine Kommissionierablage zum Ablegen der zusammengestellten Artikel aufweisen. Die Kommissionierablage befindet sich insbesondere in einer Kommissionierzone der Kommissioniereinrichtung. Das Kommissionieren von Artikeln kann z. B. aufgrund einer Order bzw. Kundenbestellung erfolgen.

Die Handlingeinrichtung kann grundsätzlich dazu ausgelegt sein, Artikel zu kommissionieren, d.h. zusammenzutragen. So kann die Handlingeinrichtung Teil der oben genannten Kommissioniereinrichtung ein.

Es kann vorgesehen sein, für das Kommissionieren von Artikeln zu Gruppen von Artikeln im Regallager eine separate Handlingeinrichtung zum Einsatz kommt.

Die Handlingeinrichtung kann die Artikel zum Beispiel auf einem Regalboden kommissionieren. Der Regalboden übt hierbei die Funktion eines Ablageorgans der Kommissionierablage aus.

Die Handlingeinrichtung kann die Artikel zum Beispiel in einem Lagerbehälter kommissionieren. Der Lagerbehälter mit den kommissionierten Artikeln kann wiederum auf einem Regalboden in der Regalablage zwischengelagert werden.

Die Kommissionierzone mit der Kommissionierablage kann in der Regalablage angeordnet sein. Die Artikel werden insbesondere auf Regalböden in der Regalablage kommissioniert, z. B. durch die Handlingeinrichtung.

Die Kommissionierzone mit der Kommissionierablage kann auf dem Transportorgan des Lagerlifts angeordnet sein. Die Artikel werden auf dem Transportorgan des Lagerlifts kommissioniert, z. B. durch die Handlingeinrichtung.

Die Kommissionierzone mit der Kommissionierablage kann in der Auslagerstation angeordnet sein. Die Artikel werden an der Auslagerstation kommissioniert, z. B. durch die Handlingeinrichtung. Die Artikel können an der Auslagerstation z. B. auf eine Wegfördereinrichtung bzw. auf ein Förderorgan, wie Förderschale, einer Wegförderreinrichtung kommissioniert werden.

Die Kommissionierzone mit der Kommissionierablage kann bei der Übergabeeinrichtung angeordnet sein. Die Artikel werden im Bereich der Übergabeeinrichtung kommissioniert, z. B. durch die Handlingeinrichtung.

In diesem Fall kann die Handlingeinrichtung die von der Handhabungsvorrichtung in der Übergabezone übernommenen Artikel, z. B. in einer an die Übergabezone anschliessenden Kommissionierzone mit Kommissionierablage, kommissionieren.

Die Kommissionierzone kann insbesondere neben der Übergabezone der Übergabeeinrichtung angeordnet sein. Die Kommissionierzone kann auch Teil der Übergabeeinrichtung bzw. Teil der dazugehörigen Übergabezone sein.

Das Kommissionieren erfolgt insbesondere vollautomatisch, z. B. mittels einer durch die Anlagensteuerung gesteuerten Handlingeinrichtung. Das Kommissionieren kann auch durch Bedienpersonal erfolgen, z. B. an der Auslagerstation.

Die vorliegende Erfindung betrifft auch ein Verfahren zum Auslagern von Artikeln aus einem Lagersystem wie oben beschrieben. Das Verfahren zeichnet sich durch die folgenden Schritte aus:
- Entnahme mindestens eines Artikels aus der Lageranlage mittels der Handhabungsvorrichtung;
- Transportieren des mindestens einen Artikels insbesondere in einem Lagerbehälter zur Übergabeeinrichtung;
- seitliches Übergeben des mindestens einen Artikels durch die Regalseite, insbesondere durch eine seitliche Übergabeöffnung, an das Regallager
- Ablegen des mindestens einen Artikels auf einem Regalboden des Regallagers.

Die Handhabungsvorrichtung wird von der Entnahmestelle des mindestens einen Artikels aus der Lageranlage bis zur Übergabeeinrichtung insbesondere horizontal bewegt. Die Handhabungsvorrichtung wird insbesondere ausschliesslich horizontal bewegt.

Handelt es sich bei der Lageranlage um ein Vertikallager so wird die Handhabungsvorrichtung von der Entnahmestelle des mindestens einen Artikels aus der Lageranlage bis zur Übergabeeinrichtung insbesondere oberhalb und ganz besonders auf der Lageranlage bewegt. Die Handhabungsvorrichtung wird insbesondere ausschliesslich oberhalb und ganz besonders auf der Lageranlage bewegt.

Handelt es sich bei der Lageranlage um ein Horizontallager so wird die Handhabungsvorrichtung von der Entnahmestelle des mindestens einen Artikels aus der Lageranlage bis zur Übergabeeinrichtung insbesondere entlang einer Transportgasse innerhalb der Lageranlage bewegt.

Gemäss einer Ausführung wird der mindestens eine Artikel mittels der Handlingeinrichtung seitlich durch die Regalseite bzw. durch die seitliche Übergabeöffnung in das Regallager transportiert.

Gemäss einer anderen Ausführung wird der mindestens eine Artikel mittels der Handhabungsvorrichtung seitlich durch die Regalseite bzw. durch die seitliche Übergabeöffnung in das Regallager transportiert.

Die Handhabungsvorrichtung transportiert den mindestens einen Artikel insbesondere in einem Lagerbehälter.

Gemäss einer Ausführungvariante transportiert die Handhabungsvorrichtung den Lagerbehälter mit dem mindestens einen Artikel seitlich durch die Regalseite bzw. durch die seitliche Übergabeöffnung in das Regallager und legt den Lagerbehälter mit dem mindestens einen Artikel insbesondere auf einer Übergabeablage ab.

Gemäss einer Ausführungvariante wird der mindestens eine Artikel, insbesondere in der Übergabeeinrichtung, mittels bzw. mit Hilfe der Handlingeinrichtung aus dem Lagerbehälter entnommen, und insbesondere auf einem Regalboden abgelegt und im Regallager eingelagert.

Der mindestens eine Artikel wird durch die Handlingeinrichtung insbesondere innerhalb des Regallagers aus dem Lagerbehälter entnommen. Der mindestens eine Artikel kann durch die Handlingeinrichtung auch ausserhalb des Regallagers aus dem Lagerbehälter entnommen und mittels der Handlingeinrichtung durch die Regalseite bzw. durch die seitliche Übergabeöffnung in das Regallager transportiert werden.

Gemäss einer Ausführungvariante wird der Lagerbehälter mit dem darin enthaltenen Artikel, insbesondere mit Hilfe der Handlingeinrichtung auf einem Regalboden abgelegt und im Regallager eingelagert.

Das Lagersystem kann mindestens ein Lesegerät zum Auslesen von Informationen von einem Informationsträger, wie RFID-Etikette, Barcode- oder QR-Code-Etikette umfassen. Der Informationsträger kann z. B. am Artikel oder am Lagerbehälter angeordnet sein. Dadurch lässt sich der Warenfluss durch das Lagersystem erfassen und steuern.

Das erfindungsgemässe Lagersystem kombiniert insbesondere die Eigenschaft einer kompakten Lagerung von Artikeln mit einer schnellen Bereitstellung bzw. Kommissionierung und Abgabe bzw. Auslagerung der eingelagerten Artikel aus dem Lagersystem.

Dank der Kombination von Lageranlage und Regallager, lassen sich Artikel unabhängig von ihrer Abgabe bzw. Auslagerung aus dem Lagersystem frühzeitig aus der Lageranlage abrufen und bis zu ihrer Abgabe bzw. Auslagerung aus dem Lagersystem im Regallager zwischenlagern. Das Regallager dient hierzu als Einlagerungspuffer bzw. Zwischenpuffer.

So können Artikel z. B. aufgrund von vorliegenden Ordern bzw. Kundenbestellungen in auslastungsschwachen Zeiten, z. B. über Nacht, aus der Lageranlage geholt bzw. entnommen und im Regallager bis zu ihrem Abruf zwischengelagert werden.

Da sich das Regallager durch vergleichsweise kurze Zugriffzeiten auf die zwischengelagerten Artikel auszeichnet, können die im Regallager zwischengelagerten Artikel auf Abruf hin vergleichsweise schnell vom Regallager bereitgestellt und aus dem Lagersystem ausgelagert bzw. abgegeben werden.

Dies entlastet wiederum die mit vergleichsweise kleiner Kapazität operierenden Handhabungsvorrichtungen der Lageranlage, da der Abruf von bereits im Regallager zwischengelagerten Artikeln die Bewirtschaftung der Lageranlage mittels Handhabungsvorrichtungen nicht beeinflusst. Überdies bleiben so auch Kapazitäten für Express-Order bzw. Bestellungen von Artikeln frei, welche ohne Zeitverzögerung aus direkt der Lageranlage abgerufen werden müssen.

Es ist sogar denkbar, dass im Regallager Artikel einer Kundenbestellung kommissioniert werden und die kommissionierten Artikel auf Abruf aus dem Lagersystem bzw. dem Regallager abgegeben bzw. ausgelagert werden. Das erfindungsgemässe Lagersystem erlaubt demnach ebenfalls das Kommissionmieren von Artikeln und das Zwischenlagern der kommissionierten Artikel im Regallager.

Nachfolgend wird der Erfindungsgegenstand anhand von Ausführungsbeispielen, welche in den beiliegenden Figuren dargestellt sind, näher erläutert. Es zeigen jeweils schematisch:
- Figur 1:: perspektivische Ansicht einer Kompaktlageranlage gemäss dem Stand der Technik;
- Figur 2:: eine Seitenansicht eines erfindungsgemässen Lagersystems;
- Figur 3:: eine Seitenansicht eines weiteren erfindungsgemässen Lagersystems;
- Figur 4a:: eine Seitenansicht eines weiteren erfindungsgemässen Lagersystems;
- Figur 4b:: eine Draufsicht eines Regalbodens eines Regallagers gemäss Figur 4a;
- Figur 5:: eine weitere Draufsicht eines Regalbodens eines Regallagers gemäss Figur 10;
- Figur 6:: eine Seitenansicht eines weiteren erfindungsgemässen Lagersystems;
- Figur 7:: eine weitere Seitenansicht des Lagersystems nach Figur 6;
- Figur 8:: eine Seitenansicht eines weiteren erfindungsgemässen Lagersystems;
- Figur 9:: eine Seitenansicht eines weiteren erfindungsgemässen Lagersystems;
- Figur 10:: eine Seitenansicht eines weiteren erfindungsgemässen Lagersystems;
- Figur 11a-f:: Detailseitenansichten aus der Übergabezone eines weiteren erfindungsgemässen Lagersystems;
- Figur 12a-d:: Detailseitenansichten aus der Übergabezone eines weiteren erfindungsgemässen Lagersystems;
- Figur 13:: eine Seitenansicht eines weiteren erfindungsgemässen Lagersystems;
- Figur 14:: eine Seitenansicht eines weiteren erfindungsgemässen Lagersystems;
- Figur 15a:: eine Seitenansicht eines weiteren erfindungsgemässen Lagersystems;
- Figur 15b:: eine Querschnittsansicht des Lagersystems nach Figur 15a.

Grundsätzlich sind in den Figuren gleiche Teile mit gleichen Bezugszeichen versehen. Die Figuren sind lediglich beispielhaft und nicht einschränkend. Für das Verständnis der Erfindung sind gewisse Merkmale in den Figuren nicht oder nur sehr stark abstrahiert dargestellt. Die nachfolgend beschriebenen Ausführungsbeispiele stehen lediglich beispielhaft für den Erfindungsgegenstand.

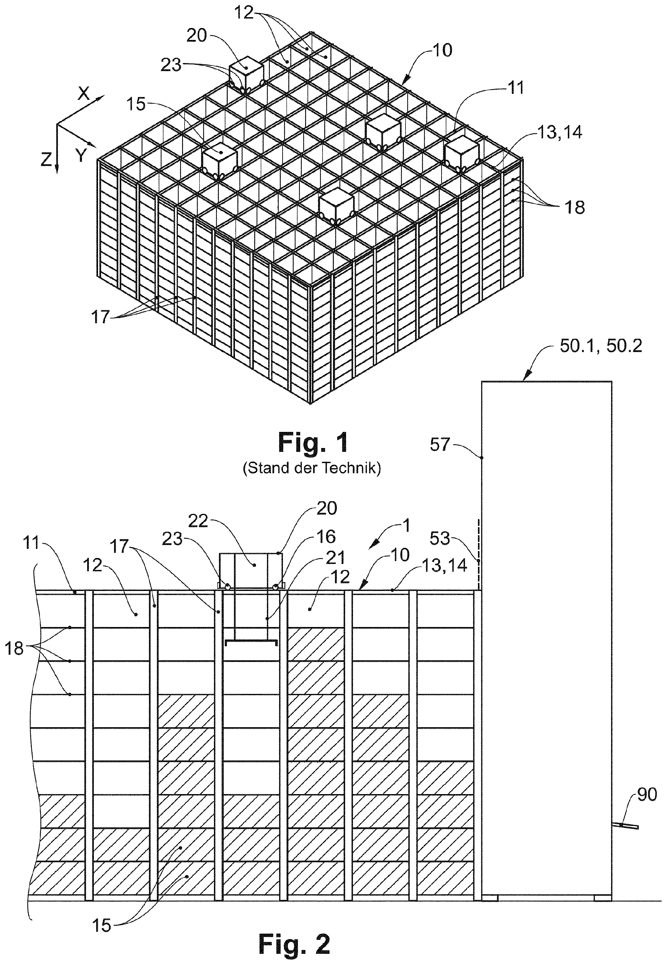

Die **Figur 1** zeigt eine Kompaktlageranlage 10, wie sie aus dem Stand der Technik bekannt ist und im vorliegenden, erfindungsgemässen Lagersystem Einsatz finden kann.

Die Kompaktlageranlage 10 dient zum Einlagern von mit Artikeln 2 bestückten Lagerbehältern 15. Die Kompaktlageranlage 10 enthält entsprechend eine Behälterlagerungseinrichtung 11 in Form einer Rahmenstruktur. Die Rahmenstruktur 11 umfasst eine Mehrzahl von Vertikalelementen 17, die über Horizontalelemente 18 miteinander verbunden sind. Ein erster Satz paralleler Horizontalelemente 18 ist senkrecht zu einem zweiten Satz paralleler Horizontalelemente angeordnet, um eine horizontale Gitterstruktur zu bilden, die von den Vertikalelementen 17 getragen werden. Die Rahmenstruktur 11 enthält eine Mehrzahl solcher Gitterstrukturen, welche übereinander und voneinander beabstandet angeordnet sind und von den Vertikalelementen 17 getragen werden.

Die Rahmenstruktur 11 bildet so genannte Lagersäulen 12 zur Aufnahme von aufeinander gestapelter Lagerbehälter 15 aus, wobei die Vertikalelemente 17 die Eckbereiche der Lagersäulen 12 ausbilden. Die Rahmenstruktur 11 verhindert eine horizontale Bewegung der Behälterstapel und führt eine vertikale Bewegung der Lagerbehälter 15.

Die oberste Ebene der Rahmenstruktur 11 umfasst eine Führungsvorrichtung 13 mit Führungsschienen 14, die in einem Gittermuster über der Oberseite der Lagersäulen 12 angeordnet sind. Die Führungsschienen 14 tragen eine Mehrzahl von Behälterhandhabungsfahrzeugen 20, welche auf Laufrollen 23 entlang der Führungsschienen 14 geführt sind. Ein erster Satz paralleler Führungsschienen 14 führt die Bewegung der Behälterhandhabungsfahrzeuge 20 in einer ersten, insbesondere horizontale Richtung X über die Oberseite der Rahmenstruktur 11. Ein zweiter Satz paralleler Führungsschienen 14, der rechtwinklig zum ersten Satz von Führungsschienen 14 angeordnet ist, führt die Bewegung der Behälterhandhabungsfahrzeuge 20 in einer zweiten, insbesondere horizontalen Richtung Y, die rechtwinklig zur ersten Richtung X verläuft. Auf diese Weise ermöglichen die Führungsschienen 14 eine, insbesondere horizontale Bewegung der Behälterhandhabungsfahrzeuge 20 in zwei Dimensionen in einer horizontalen X-Y-Ebene. Die Bewegung der Behälterhandhabungsfahrzeuge 20 ist dabei jeweils insbesondere geradlinig.

Die Behälterhandhabungsfahrzeuge 20 können zur Entnahme von Lagerbehältern 15 aus den Lagersäulen 12 jeweils oberhalb der Lagersäulen 12 in Position gebracht werden.

Zum abwechselnden Bewegen der Behälterhandhabungsfahrzeuge 20 in der ersten und zweiten Richtung X, Y enthalten diese jeweils einen ersten Satz von vier Laufrollen 23, z. B. bestehend aus einem ersten Paar Laufrollen 23 an der Vorderseite des Behälterhandhabungsfahrzeugs 20 und einem zweiten Paar Laufrollen 23 an der Rückseite des Behälterhandhabungsfahrzeugs 20, welche so angeordnet sind, dass die Laufrollen 23 mit zwei parallel verlaufenden und voneinander beabstandeten Führungsschienen 14 des ersten Satzes von Führungsschienen 14 in Eingriff kommen. In ähnlicher Weise ist ein zweiter Satz von vier Laufrollen 23, bestehend aus zwei Paaren von Laufrollen 23 auf jeder Seite des Behälterhandhabungsfahrzeugs 20, so angeordnet, dass diese mit zwei parallel verlaufenden und voneinander beabstandeten Führungsschienen 14 des zweiten Schienensatzes in Eingriff kommen. Jeder Satz Laufrollen 23 kann angehoben und abgesenkt werden, so dass je nach gewünschter Bewegungsrichtung entweder der erste Satz Laufrollen 23 oder der zweite Satz Laufrollen 23 mit dem jeweiligen Satz Führungsschienen 14 in Eingriff steht.

Durch Absenken des einen Satzes von Laufrollen 23 und Anheben des anderen Satzes von Laufrollen 23 kann also die Bewegungsrichtung des Behälterhandhabungsfahrzeugs 20 zwischen der X- und Y-Richtung gewechselt werden.

Wenn einer der Sätze Laufrollen 23 mit einem Satz Führungsschienen 14 in Eingriff steht, können die Laufrollen 23 über einen im Behälterhandhabungsfahrzeug 20 untergebrachten Antriebsmechanismus (nicht dargestellt) angetrieben werden, um das Behälterhandhabungsfahrzeug 20 in X- bzw. Y-Richtung zu bewegen.

Das Behälterhandhabungsfahrzeug 20 ist mit einem Erfassungs- und Haltewerkzeug 21 ausgestattet (siehe auch Figur 2). Das Erfassungs- und Haltewerkzeug 21 ist insbesondere ein Greiferwerkzeug, welches über mehrere Seile bzw. Bänder am Grundkörper des Behälterhandhabungsfahrzeugs 20 aufgehängt ist. Die Seile bzw. Bänder sind mit einem Ab- und Aufwickelmechanismus (nicht dargestellt) verbunden. Durch Abspulen der Seile bzw. Bänder kann das Erfassungs- und Haltewerkzeug 21 zum Erfassen und Halten eines Lagerbehälters 15 in die Lagersäule 12 abgesenkt werden. Die Bewegung des Erfassungs- und Haltewerkzeug 21 erfolgt hierbei in einer Z-Richtung. Die X-, Y- und Z-Richtung liegen dabei insbesondere senkrecht aufeinander.

Durch Aufspulen der Seile bzw. Bänder kann das Erfassungs- und Haltewerkzeug 21 zusammen mit dem erfassten Lagerbehälter 15 aus der Lagersäule 12 herausgehoben werden. Zur Aufnahme des aus der Lagersäule 12 herausgehobenen Lagerbehälters 15 bildet das Behälterhandhabungsfahrzeug 20 einen Behälteraufnahmeraum 22 aus.

Das Behälterhandhabungsfahrzeuge 20 wird nun mit einem aus der Lagersäule 12 entnommenen Lagerbehälter 15 mit mindestens einem darin enthaltenen Artikel 2 auf der Oberseite der Rahmenstruktur 11 entlang der Führungsschienen in X-, Y-Richtung autonom zur Übergabeeinrichtung 56 bewegt.

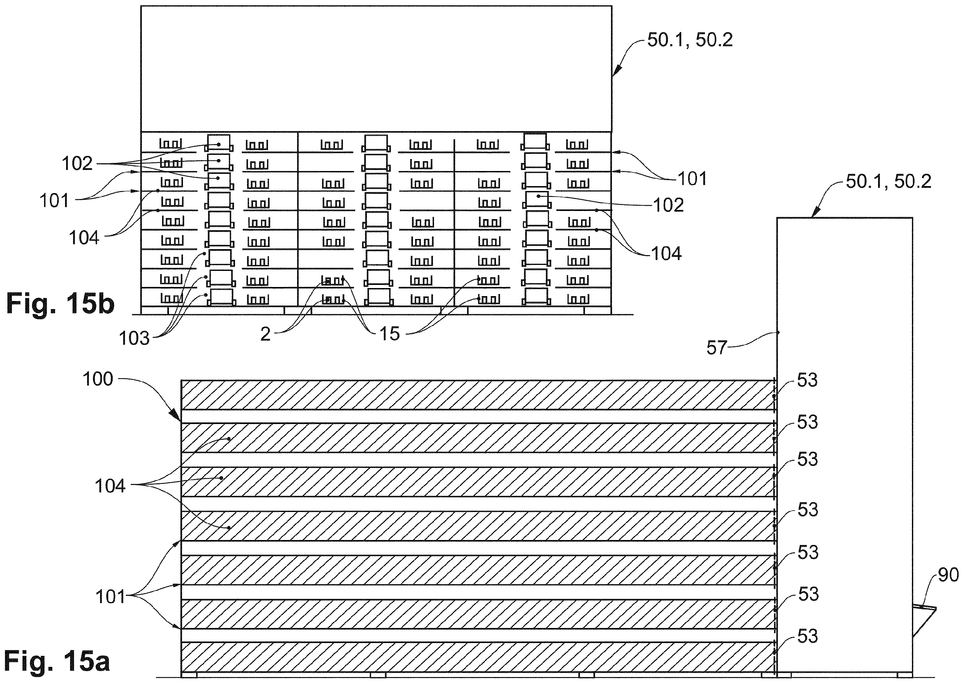

Die in den **Figuren 2 bis 14** gezeigten Lagersysteme 1 enthalten jeweils eine Lageranlage 10 gemäss Figur 1. Allerdings ist anzufügen, dass auch andere Typen von Lageranlagen, welche eine seitliche Übergabe der Artikel in das Regallager erlauben denkbar sind (siehe z. B. Figur 15). Überdies sind die in den Figur 2 bis 14 gezeigten Ausführungsformen von Regallagern 50.1, 50.2 nicht an eine spezifische Ausführung der Lageranlage gebunden.

Die in den **Figuren 2 bis 14** gezeigten Lagersysteme 1 weisen jeweils ein Regallager 50.1, 50.2 mit einer Mehrzahl von in einem Lagerraum 55 angeordneten Regalböden 51 zum Zwischenlagern von Artikeln 2 auf. Die Regalböden 51 erstrecken sich jeweils über die Länge des Regallagers 50.1, 50.2. Das Regallager 50.1, 50.2 wird durch Regalwände 57 seitlich begrenzt.

Das Regallager 50.1, 50.2 weist eine Auslagerstation 90 zum Auslagern bzw. Abgeben von Artikeln 2 aus dem Lagersystem 1 auf.

Die Regalböden 51 des Regallagers 50.1 gemäss den **Figuren 1 bis 13** sind in einer Lagerposition an einer Haltestruktur des Regallagers 50.1, 50.2 übereinander angeordnet und bilden eine Regalablage 58 zum Zwischenlagern von Artikeln 2 aus. Die Haltestruktur für die Regalböden 51 entspricht in den gezeigten Ausführungsbeispielen der Regalwand. Dies ist allerdings nicht zwingend.

Die Regallager 50.1 bzw. deren Regalablagen 58 weisen jeweils zwei Regalreihen mit jeweils einer Mehrzahl von vertikal übereinander angeordneten Regalböden 51 auf, welche jeweils an einander gegenüber liegenden Seitenwänden 57 des Regallagers 50.1 angeordnet sind.

Zwischen den zwei Regalreihen wird ein Transportschacht ausgebildet, in welchem mindestens ein Lagerlift 60 für den vertikalen Transport der Artikel 2 zu den Regalböden 51 hin bzw. von den Regalböden 51 weg angeordnet ist. Der mindestens eine Lagerlift 60 umfasst mindestens einen Liftmast 62, an welchem ein Transportorgan 61 über einen Antrieb vertikal bewegbar geführt ist. Die Artikel 2 werden mit dem Transportorgan 61 im Regallager 50.1 in Vertikalrichtung V bewegt.

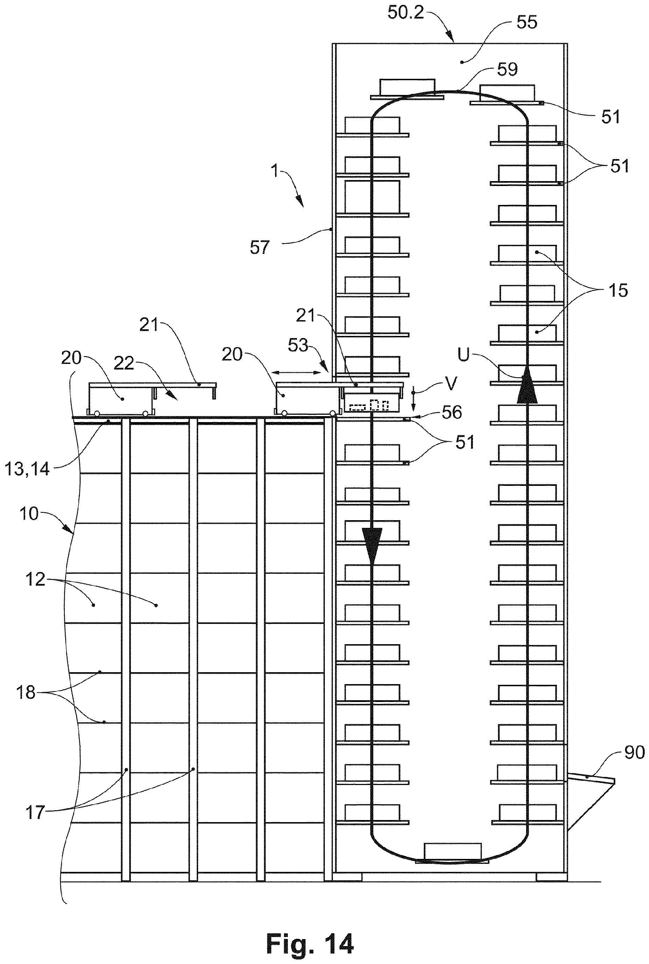

Das Regallager 50.2 gemäss Figur 14 ist im Unterschied zu den Regallagern gemäss den Figuren 2 bis 13 als vertikales Umlaufregal mit einer Mehrzahl von vertikal umlaufenden Regalböden 51 ausgebildet. Der Umlauf der Regalböden 50.2 erfolgt dabei nach dem Paternoster-Prinzip. Die Regalböden 51 sind hierzu durch ein Umlauforgan 59 miteinander verbunden und bewegen sich folglich insbesondere auch synchron miteinander in einer Umlaufrichtung U.

Das Regallager 50.1, 50.2 gemäss den Figuren 2 bis 14 schliesst jeweils unmittelbar seitlich an die Lageranlage 10 an. Das Lagersystem 1 bildet zum Übergeben von Artikeln 2 von der Lageranlage 10 an das Regallager 50.1, 50.2 eine Übergabeeinrichtung 56 mit einer seitlichen Übergabeöffnung 53 in der Seitenwand 57 des Regallagers an, welche zur Lageranlage 10 hin gerichtet ist, aus.

Zur Bereitstellung von Artikeln 2 aus der Lageranlage 10 im Regallager 50.1, 50.2 werden die Lagerbehälter 15 mit dem darin enthaltenen mindestens einen Artikel 2 durch die Behälterhandhabungsfahrzeuge 20 aus den Lagersäulen 12 der Lageranlage 10 entnommen und zur Übergabe der Übergabeeinrichtung 56 zugeführt.

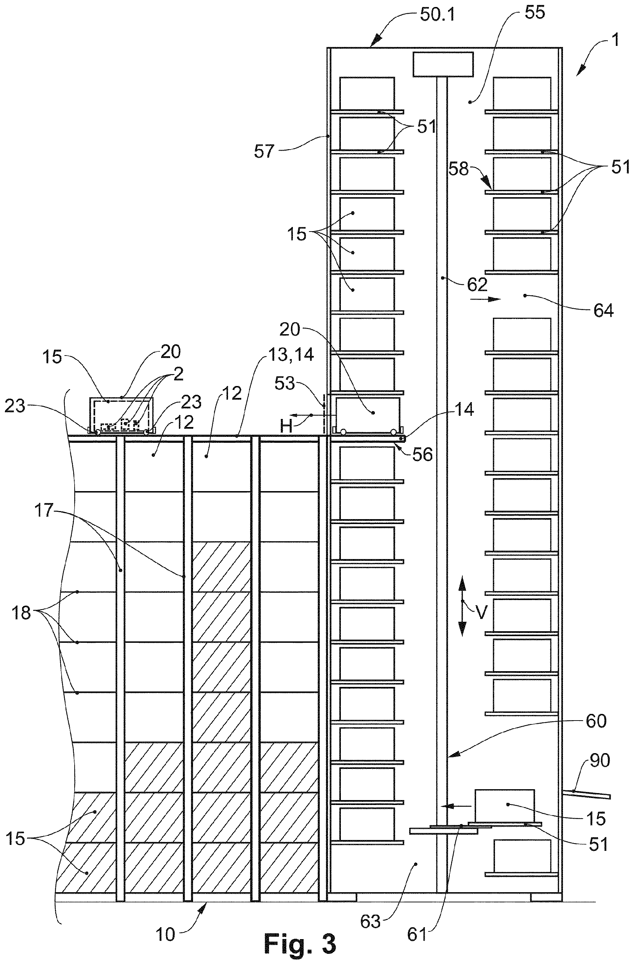

Aus der **Figur 2** geht stellvertretend für die anderen Ausführungsbeispiele nach Figur 3 bis 14 hervor, dass das Regallager 50.1, 50.2 höher ist als die Lageranlage 10 und sich die Regalablage 58 mit den Regalböden 51 bzw. der Lagerraum 55 des Regallagers 50.1, 50.2 über die Oberseite der Rahmenstruktur 11 der Lageranlage 10 erstreckt. Entsprechend grenzt die Oberseite der Rahmenstruktur 11 und somit auch die Führungsvorrichtung 13 auf der Oberseite der Rahmenstruktur 11 seitlich an das Regallager 50.1, 50, 2 an.

Die Übergabeöffnung 53 der Übergabeeinrichtung ist auf Höhe der Oberseite der Lageranlage 10 bzw. der Rahmenstruktur 11 in der zur Lageranlage 10 hin gerichteten Seitenwand des Regallagers 50.1, 50.2 angeordnet.

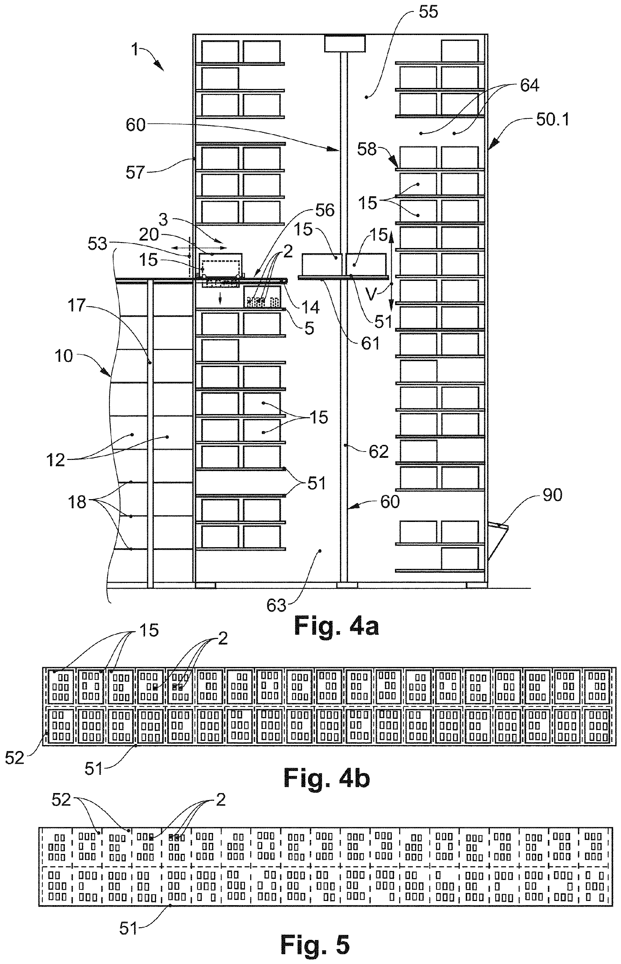

Gemäss der Ausführung nach **Figur 3** wird das Behälterhandhabungsfahrzeug 20 mit dem aus der Lageranlage 10 entnommenen Lagerbehälter 15 durch die seitliche Übergabeöffnung 53 in das Regallager 50.1 in eine Übergabeposition bewegt. Entsprechend sind die beiden parallel zueinander verlaufenden Führungsschienen 14 durch die Übergabeöffnung 53 in das Regallager 50.1, 50.2 geführt und enden in der Übergabeposition. Dies trifft auch auf die Ausführungen nach Figur 4-8 und 10, 11 sowie 13 zu.

Gemäss der Ausführung nach Figur 3 wird der Lagerbehälter 15 mit dem mindestens einen darin abgelegten Artikel 2 vom Behälterhandhabungsfahrzeug 20 an das Transportorgan 61 des Lagerlifts 60 übergeben. Der Lagerlift 60 fördert den Lagerbehälter 51 mit dem mindestens einen Artikel 2 zu einer freien Lagerposition 64, wo der Lagerbehälter 51 zwischengelagert wird. Der Lagerbehälter 51 wird vom Behälterhandhabungsfahrzeug 20 insbesondere auf einen leeren Regalboden 51 auf dem Transportorgan 61 abgelegt. Das Transportorgan 61 transportiert den Regalboden 51 zusammen mit dem auf diesem angeordneten Lagerbehälter 15 zur freien Lagerposition 64 in der Regalablage 58.

Gemäss der Ausführung nach **Figur 4a** bilden die Regalböden 51 Doppelreihen von Lagerplätzen 52 für Lagerbehälter 15 aus. Dadurch ist der Lagerlift 60 in der Lage, Regalböden 51 mit einer Doppelreihe von Lagerbehältern 15 vertikal zu transportieren.

Überdies weist die Übergabeeinrichtung 56 eine im Regallager 51 unmittelbar hinter der Übergabeöffnung 53 und unterhalb der Führungsschienen 14 angeordnete Übergabeablage auf. Die Übergabeablage bildet Platz für zwei Lagerbehälter 15 aus. Das in die Übergabeposition oberhalb der Übergabeablage bewegte Behälterhandhabungsfahrzeug 20 kann nun den Lagerbehälter 15 zwischen den beiden Führungsschienen 14 hindurch nach unten auf die Übergabeablage absenken und freigeben bzw. ablegen. Die Übergabeablage wird hier durch einen individuell bewegbaren Regalboden 51 ausgebildet.

Nach erfolgter Übergabe wird der übergebene Lagerbehälter 15 zusammen mit dem Regalboden 51, auf welchem dieser angeordnet ist, mit dem Lagerlift 60 in eine Lagerposition 64 in der Regalablage 58 transportiert.

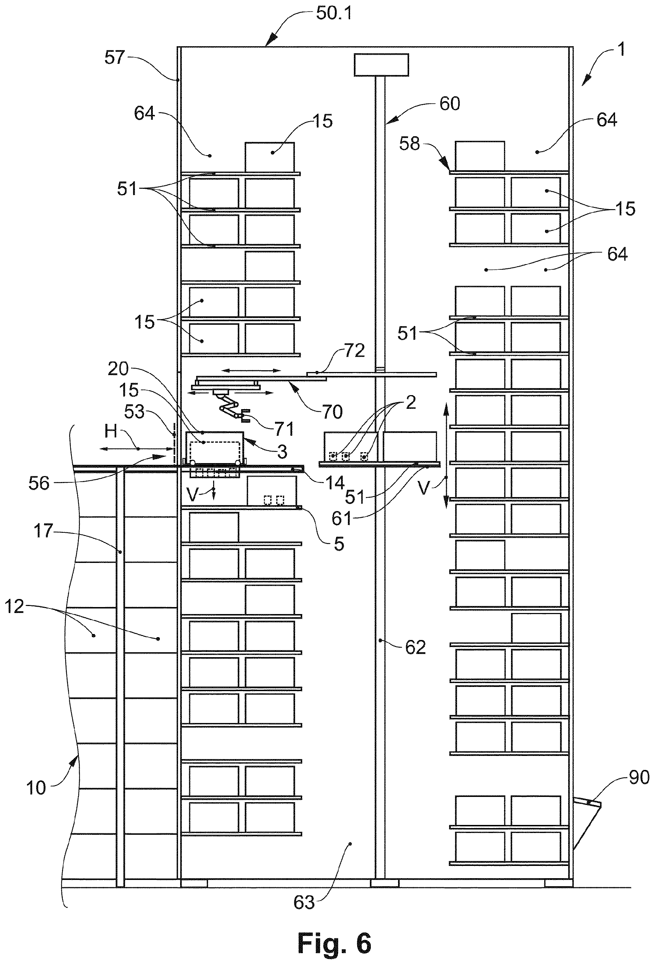

Eine vergleichbare Anordnung findet sich auch in den Ausführungen nach Figur 6-8 und 10, 11 sowie 13.

Die **Figur 4b** zeigt einen Regalboden 51 von oben mit einer Doppelreihe von Lagerplätzen 52 für Lagerbehälter 15. Auf den Lagerplätzen 52 stehen Lagerbehälter 15 mit darin angeordneten Artikeln 2.

Die **Figur 5** zeigt ebenfalls einen Regalboden 51 von oben mit einer Doppelreihe von Lagerplätzen 52 für Artikel 2. Die Artikel 2 sind direkt auf den Lagerplätzen 52 abgelegt. Pro Lagerplatz können ein oder eine Gruppe von Artikel 2 abgelegt sein. So kann z. B. ein Lagerplatz auch eine kommissionierte Gruppe von Artikeln 2 aufnehmen.

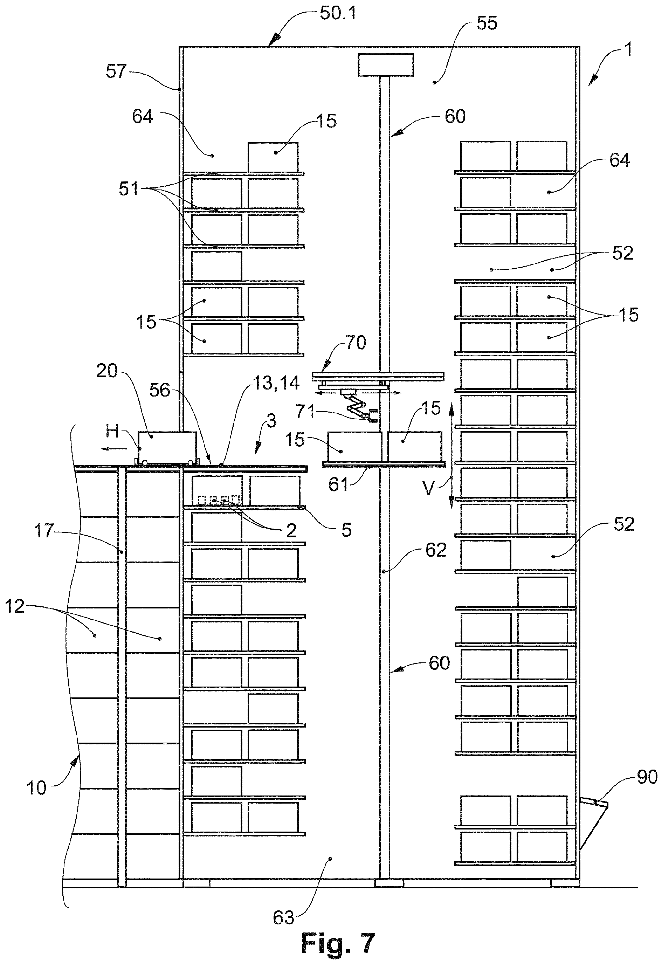

Gemäss der Ausführung nach **Figur 6** und **7** enthält das Regallager eine Handlingeinrichtung 70 mit einem Erfassungs- und Haltewerkzeug 71 zum Erfassen und Halten von einzelnen Artikeln 2.

Die Handlingeinrichtung 70 ist am Liftmast 62 angeordnet und entlang diesem analog zum Transportorgan des Lagerlifts 60 über einen Antrieb vertikal bewegbar. Die Handlingeinrichtung 70 ist ferner über eine Führungsvorrichtung, wie Teleskopiervorrichtung 72, horizontal verschiebbar angeordnet und kann zwischen der Übergabeeinrichtung 56 und dem Transportorgan 62 am Lagerlift 60 horizontal bewegt werden. Das Erfassungs- und Haltewerkzeug 71, welches hier ein Greiferwerkzeug ist, ist am Ende eines Gelenkarms der Handlingeinrichtung 70 befestigt. Der Gelenkarm ist wiederum mit der Teleskopiervorrichtung 72 verbunden.

Die aus der Lageranlage 10 entnommenen Lagerbehälter 15 mit darin abgelegten Artikeln 2 werden mit dem Behälterhandhabungsfahrzeug 20 in einer Horizontalbewegung über der Rahmenstruktur 11 der Lageranlage 10 seitlich in das Regallager 50.1 transportiert. Die Lagerbehälter 15 werden nach Erreichen der Übergabeposition durch das Behälterhandhabungsfahrzeug 20 auf eine unterhalb angeordnete Übergabeablage abgelegt.

Mittels der Handlingeinrichtung 70 werden nun einzelne Artikel 2 aus den Lagerbehältern 15 auf der Übergabeablage entnommen und in Lagerbehälter 15 auf dem Transportorgan 61 des Lagerlifts 60 transportiert. Auf diese Weise lassen sich während der Übergabe der Artikel 2 Gruppen von Artikeln 2 kommissionieren, wie sie später aus dem Regallager 50.1 abgerufen werden.

Die leeren Lagerbehälter 15 bzw. die Lagerbehälter 15 mit darin abgelegten, nicht benötigten Artikeln 2, werden durch das Behälterhandhabungsfahrzeug 20 wieder in die Lageranlage 10 zurückgeführt (siehe Figur 7).

Der Lagerbehälter 15 mit den darin kommissionierten Artikeln 2 werden mit dem Transportorgan 61 vertikal in eine Lagerposition der Regalablage 58 transportiert und in der Lagerposition abgesetzt. Die Lagerbehälter 15 können hierzu bereits auf dem Transportorgan 61 auf einem Regalboden 51 angeordnet sein und zusammen mit dem Regalboden 51 in der Lagerposition abgesetzt werden.

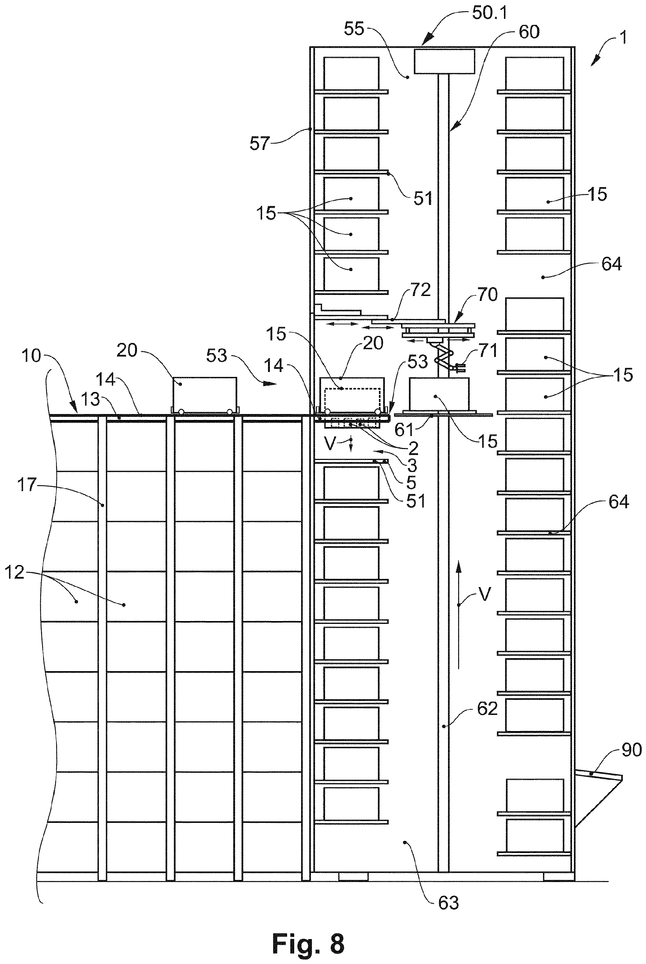

Die Ausführung nach **Figur 8** unterscheidet sich von Figur 6 und 7 unter anderem dadurch, dass die Regalböden 51 jeweils nur eine Einzelreihe mit Lagerplätzen 52 für Lagerbehälter 15 ausbilden. Entsprechend weisen die Übergabeablage 5 nur für einen Lagerbehälter 15 Platz auf.

Überdies ist die Handlingeinrichtung 70 gemäss Figur 8 oberhalb der Übergabeöffnung 53 innen an der Seitenwand 57 des Regallagers 50.1 angebracht, in welcher auch die Übergabeöffnung 53 angeordnet ist.

Die Handlingeinrichtung 70 ist auch hier über eine Führungsvorrichtung, wie Teleskopiervorrichtung 72, horizontal verschiebbar angeordnet und kann zwischen der Übergabeeinrichtung 56 und dem Transportorgan 61 am Lagerlift 60 horizontal bewegt werden. Das Erfassungs- und Haltewerkzeug 71, welches hier ein Greiferwerkzeug ist, ist ebenfalls am Ende eines Gelenkarms der Handlingeinrichtung 70 angeordnet. Der Gelenkarm ist wiederum an der Teleskopiervorrichtung 72 angeordnet.

Analog zur Ausführung nach Figur 6 und 7 werden auch hier mittels der Handlingeinrichtung 70 einzelne Artikel 2 aus dem Lagerbehälter 15 in der Übergabeablage entnommen und in einen Lagerbehälter 15 auf dem Transportorgan 61 des Lagerlifts 60 transportiert. Auf diese Weise lassen sich während der Übergabe der Artikel 2 Gruppen von Artikeln 2 kommissionieren, wie sie später aus dem Regallager 50.1 abgerufen werden.

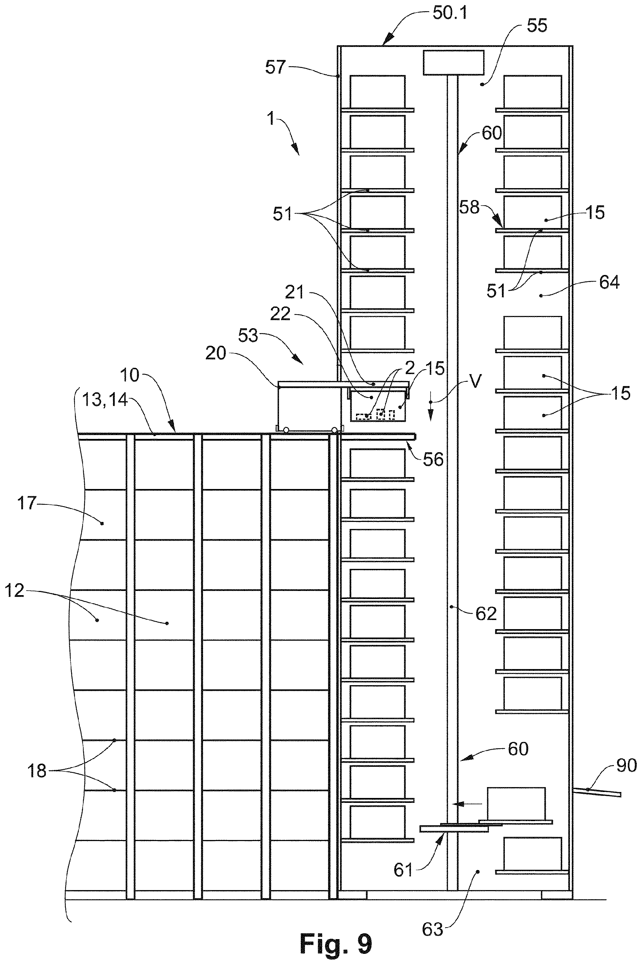

Gemäss der Ausführung nach **Figur 9** ist das Erfassungs- und Haltewerkzeug 21 zusammen mit dem Behälteraufnahmeraum 22 dem Grundkörper des Behälterhandhabungsfahrzeugs 20, welcher auch die Laufrollen 23 aufweist, vorgelagert angeordnet. Zur Übergabe von Artikeln 2 wird das vorgelagerte Erfassungs- und Haltewerkzeug 21 zusammen mit dem Behälteraufnahmeraum 22, in welchem der Lagerbehälter 15 gehalten wird, durch die Übergabeöffnung 53 in die Übergabeposition bewegt. Der Lagerbehälter 15 wird durch das Erfassungs- und Haltewerkzeug 21 auf der Übergabeablage abgelegt.

Da nur das vorgelagerte Erfassungs- und Haltewerkzeug 21 zusammen mit dem Behälteraufnahmeraum 22 und dem darin gehaltenen Lagerbehälter 15 durch die Übergabeöffnung 53 in das Regallager 50.1 bewegt werden und der Grundkörper des Behälterhandhabungsfahrzeugs 20 mit den Laufrollen 23 vor der Übergabeöffnung 53 ausserhalb des Regallagers 50.1 verbleibt, endet das mindestens eine Führungsorgan, insbesondere die Führungsschiene 14, vor dem Regallager 50.1 bzw. vor dessen Übergabeöffnung 53.

Das Transportorgan 61 des Lagerlifts 60 weist eine horizontal verschiebbare Unterlage auf, welche sich in die Übergabezone der Übergabeeinrichtung 56 schieben lässt, wenn sich das Transportorgan 61 auf Höhe der Übergabeeinrichtung 56 befindet. Die in die Übergangszone geschobene Unterlage des Transportorgans 61 bildet hierbei die Übergabeablage in der Übergabeeinrichtung 56 aus, auf welcher das Behälterhandhabungsfahrzeugs 20 den zu übergebenden Lagerbehälter 15 ablegt. Zum Transportieren des übergebenen Lagerbehälters 15 mit dem Lagerlift 60 wird die verschiebbare Unterlage mit dem übergebenen Lagerbehälter 15 aus der Übergabeeinrichtung 56 zurückgezogen.

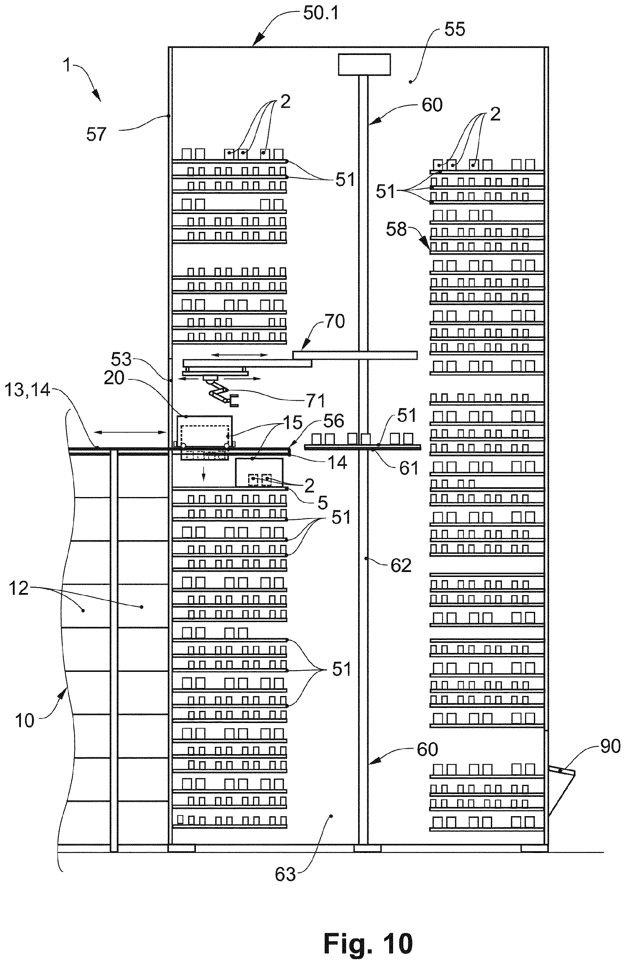

Gemäss der Ausführung nach **Figur 10** weisen die Regalböden 51 jeweils eine Doppelreihe von Lagerplätzen 52 für Artikel 2 auf (siehe auch Figur 5). Die Artikel 2 sind direkt auf den Lagerplätzen 52 abgelegt. Pro Lagerplatz können eine Gruppe von Artikeln 2 abgelegt werden. So kann z. B. ein Lagerplatz auch eine kommissionierte Gruppe von Artikeln 2 aufnehmen. Das Regallager 50.1 weist eine Handlingeinrichtung 70 auf, welche analog zur Handlingeinrichtung 70 nach Figur 6 und 7 aufgebaut ist. Für weitere Details wird auf die diesbezügliche Beschreibung zu den Figuren 6 und 7 verwiesen.

Das Behälterhandhabungsfahrzeug 20 und die Übergabeeinrichtung 56 sind ebenfalls analog zum Behälterhandhabungsfahrzeug 20 und zur Übergabeeinrichtung 56 gemäss Figur 6 und 7 aufgebaut. Entsprechend wird auch hier für weitere Details auf die diesbezügliche Beschreibung zu den Figuren 6 und 7 verwiesen.

Die aus der Lageranlage 10 entnommenen Lagerbehälter 15 mit darin abgelegten Artikeln 2 werden mit dem Behälterhandhabungsfahrzeug 20 in einer Horizontalbewegung über der Rahmenstruktur 11 der Lageranlage 10 seitlich in das Regallager 50.1 transportiert. Die Lagerbehälter 15 werden nach Erreichen der Übergabeposition durch das Behälterhandhabungsfahrzeug 20 auf die unterhalb angeordnete Übergabeablage abgesetzt.

Mittels der Handlingeinrichtung 70 werden nun einzelne Artikel 2 aus den Lagerbehältern 15 auf der Übergabeablage entnommen und auf einen Regalboden 51 auf dem Transportorgan 61 des Lagerlifts 60 transportiert. Auf diese Weise lassen sich während der Übergabe der Artikel 2 Gruppen von Artikeln 2 kommissionieren, wie sie später aus dem Regallager 50.1 abgerufen werden.

Die leeren Lagerbehälter 15 bzw. die Lagerbehälter 15 mit darin abgelegten, nicht benötigten Artikeln 2, werden durch das Behälterhandhabungsfahrzeug 20 wieder abgeholt und in die Lageranlage 10 zurückgeführt.

Der Regalboden 51 mit den darauf kommissionierten Artikeln 2 wird mit dem Transportorgan 61 vertikal in eine Lagerposition der Regalablage 58 transportiert und in einer Lagerposition abgesetzt.

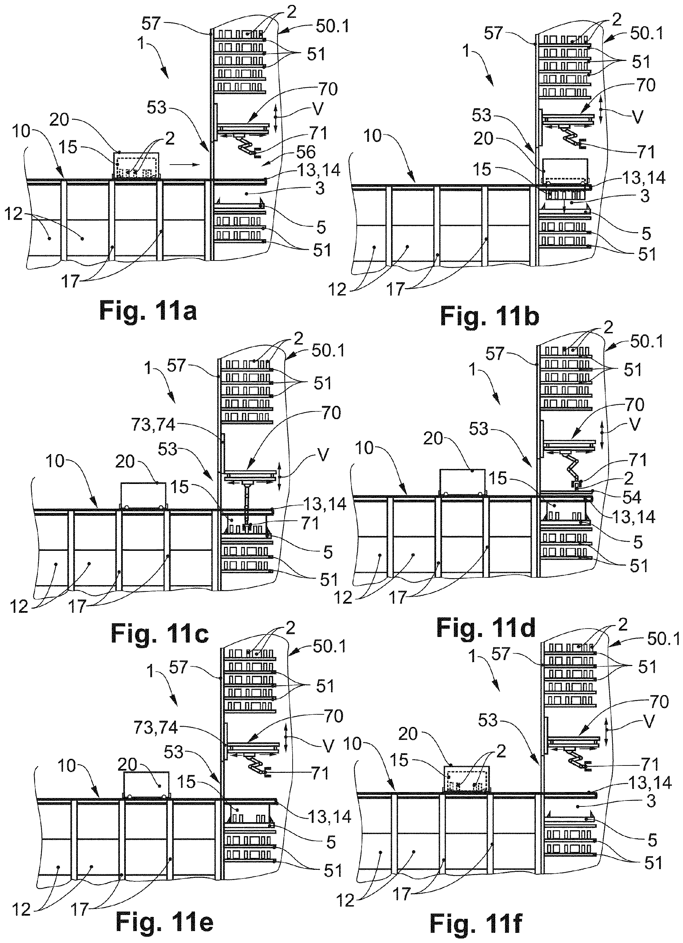

Gemäss der Ausführung nach **Figur 11a** - **11f** ist die Handlingeinrichtung 70 analog zur Figur 8 über eine Führungsvorrichtung 73 oberhalb der Übergabeöffnung 53 innen an der Seitenwand 57 des Regallagers 50.1 angeordnet bzw. angebracht.

Die Handlingeinrichtung 70 ist über eine Führungsvorrichtung 73 sowohl horizontal als auch vertikal verschiebbar angeordnet. Das Erfassungs- und Haltewerkzeug 71, welches hier ein Greiferwerkzeug ist, ist am Ende eines Gelenkarms der Handlingeinrichtung 70 angeordnet. Der Gelenkarm ist wiederum an der Führungsvorrichtung 73 angeordnet.

Das Behälterhandhabungsfahrzeug 20 und die Übergabeeinrichtung 56 sind ebenfalls analog zum Behälterhandhabungsfahrzeug 20 und zur Übergabeeinrichtung 56 gemäss Figur 8 aufgebaut. Entsprechend wird für weitere Details auf die diesbezügliche Beschreibung zu Figur 8 verwiesen.

Die aus der Lageranlage 10 entnommenen Lagerbehälter 15 mit darin abgelegten Artikeln 2 werden mit dem Behälterhandhabungsfahrzeug 20 in einer Horizontalbewegung über der Rahmenstruktur 11 der Lageranlage 10 seitlich in das Regallager 50.1 transportiert. Die Lagerbehälter 15 werden nach Erreichen der Übergabeposition durch das Behälterhandhabungsfahrzeug 20 auf die unterhalb angeordnete Übergabeablage abgesetzt.

Analog zur Ausführung nach Figur 10 werden auch hier einzelne Artikel 2 mittels der Handlingeinrichtung 70 aus dem auf der Übergabeablage angeordneten Lagerbehälter 15 entnommen. Gemäss vorliegender Ausführung ist seitlich von der Übergabeablage eine Kommissionierablage 54 angeordnet, auf welcher Gruppen von übergebenen Artikeln 2 kommissioniert werden. Die Kommissionierablage 54 kann z. B. durch einen Regalboden 51 ausgebildet werden, welcher durch den Lagerlift 60 nach Abschluss der Kommissionierung zusammen mit den kommissionierten Artikeln 2 in eine Lagerposition 64 in der Regalablage 58 transportiert wird.

Da hier die Artikel 2 unmittelbar neben der Übergabeablage und nicht wie gemäss Figur 8 auf dem Transportorgan 61 des Lagerlifts 60 kommissioniert werden, braucht die Führungsvorrichtung 73 zur horizontalen Verschiebung der Handlingeinrichtung 70 keine Teleskopiereinrichtung für die Überwindung grösserer horizontaler Distanzen zu enthalten.

Auf diese Weise lassen sich während der Übergabe der Artikel 2 bereits Gruppen von Artikeln 2 kommissionieren, wie sie später aus dem Regallager 50.1 abgerufen werden.

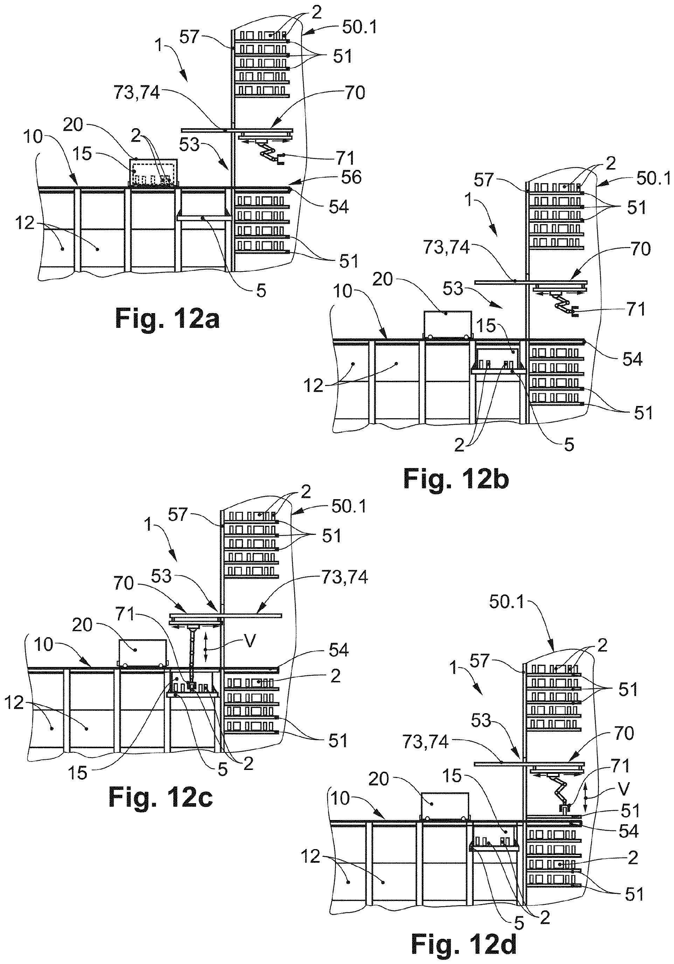

Die **Figur 12a** - **12d** zeigt eine besondere Ausführung einer Übergabeeinrichtung. Die Übergabeablage der Übergabeeinrichtung ist hier ausserhalb des Regallagers 50.1 unmittelbar vor der Übergabeöffnung 53 angeordnet. Die Übergabeablage 5 ist unterhalb der Führungsschienen 14 angeordnet, über welche die Behälterhandhabungsfahrzeuge 20 mit den Lagerbehältern 15 zum Regallager 50.1 transportiert werden. Das in die Übergabeposition oberhalb der Übergabeablage 5 bewegte Behälterhandhabungsfahrzeug 20 kann nun den Lagerbehälter 15 zwischen den beiden Führungsschienen 14 hindurch nach unten auf die Übergabeablage 5 absenken und freigeben bzw. ablegen.

Die Handlingeinrichtung 70 umfasst ebenfalls ein Erfassungs- und Haltewerkzeug 71 in Form eines Greiferwerkzeuges, welches am Ende eines Gelenkarms angeordnet ist. Die Handlingeinrichtung 70 ist über eine Führungsvorrichtung 73 oberhalb der Übergabeöffnung 53 an der Seitenwand 57 des Regallagers 50.1 angeordnet. Die Führungsvorrichtung 73 umfasst eine durch die Übergabeöffnung 53 nach aussen geführte Führungsschiene 74, über welche die Handlingeinrichtung 70 zur Übernahme von Artikeln von der Übergabeablage durch die Übergabeöffnung 53 nach aussen bewegt werden kann (siehe Figur 12c).

Zur Übernahme von Artikeln 2 von der Übergabeablage wird die Handlingeinrichtung 70 durch die Übergabeöffnung 53 nach aussen bewegt. Die Handlingeinrichtung 70 erfasst mittels des Erfassungs- und Haltewerkzeugs 71 Artikel 2, welche in dem auf der Übergabeablage abgelegten Lagerbehälter 15 enthalten sind. Die Handlingeinrichtung 70 wird anschliessend mit den erfassten Artikeln 2 durch die Übergabeöffnung 53 wieder in das Regallager 50.1 bewegt, in welchem die Handlingeinrichtung 70 die Artikel auf einer Kommissionierablage 54 in Ausführung eines Regalbodens 51 ablegt und kommissioniert. Der Regalboden 51 mit den kommissionierten Artikeln 2 wird zwecks Zwischenlagerung durch den Lagerlift (nicht gezeigt) in eine Lagerposition in der Regalablage transportiert.

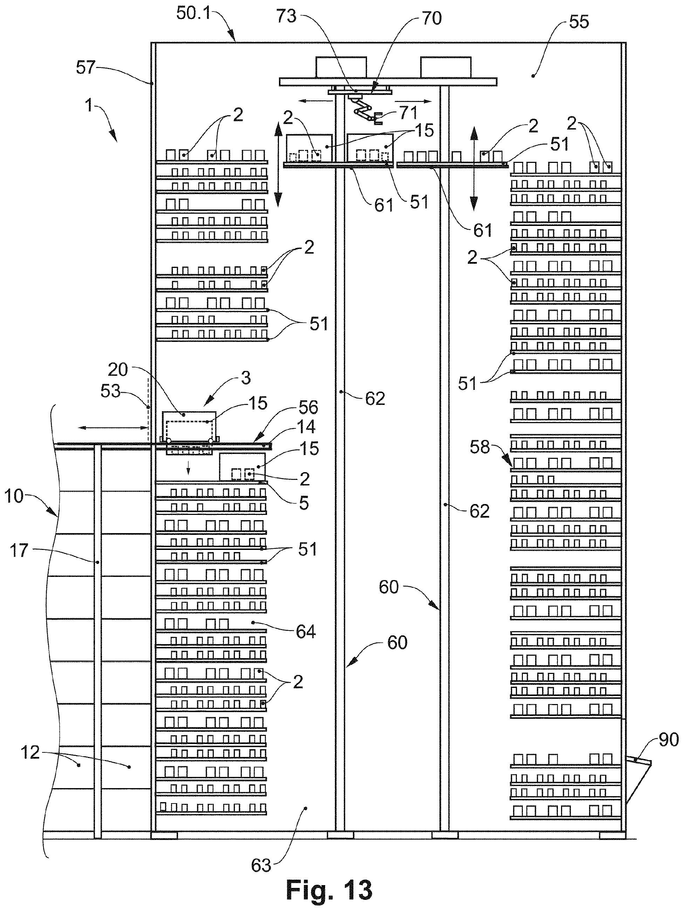

Die **Figur 13** zeigt eine Abwandlung der Ausführung nach Figur 10, auf deren Beschreibung bezüglich der gemeinsamen Merkmale verwiesen wird. Die vorliegende Ausführung gemäss Figur 13 weist im Gegensatz zur Ausführung nach Figur 10 zwischen den beiden Regalreihen mit Doppelreihen von Lagerplätzen 52 zwei Lagerlifte 60 mit jeweils einem Transportorgan 61 auf. Die Transportorgane 61 sind jeweils an mindestens einen Liftmast 62 über einen Antrieb vertikal bewegbar geführt.

Die Handlingeinrichtung 70 ist über eine Führungsvorrichtung 73 am Liftmast 62 beider Lagerlifte 60 angeordnet und entlang diesen analog zum Transportorgan 61 der beiden Lagerlifte 60 über einen Antrieb vertikal bewegbar. Die Handlingeinrichtung 70 ist ferner über die Führungsvorrichtung 73 horizontal bewegbar angeordnet und kann sowohl zwischen der Übergabeeinrichtung 56 und einem der Lagerlifte 60 als auch zwischen den Transportorganen 61 der beiden Lagerlifte 60 horizontal bewegt werden. Das Erfassungs- und Haltewerkzeug 71, welches hier ein Greiferwerkzeug ist, ist am Ende eines Gelenkarms der Handlingeinrichtung 70 befestigt. Der Gelenkarm ist wiederum an der Führungsvorrichtung 73 angeordnet.

Dank den beiden Lagerliften 60 lassen sich die beiden Regalreihen mit Doppelreihen von Lagerplätzen getrennt voneinander bewirtschaften. Ferner lassen sich die beiden Transportorgane 61 in Kombination miteinander auch zum Kommissionieren von Artikeln 2 einsetzen. So kann zum Beispiel ein erstes Transportorgan 61 Lagerbehälter 15 mit darin enthaltenen Artikeln 2 aufnehmen während die Artikel 2 auf dem zweiten Transportorgan 61 mittels der Handlingeinrichtung 70 kommissioniert werden. Hierzu entnimmt die Handlingeinrichtung 70 mittels des Erfassungs- und Haltewerkzeug 71 einzelne Artikel 2 aus den Lagerbehältern 15 auf dem ersten Transportorgan 61 und legt diese auf einem Regalboden 51 auf dem zweiten Transportorgan 61 ab.

Die Ausführung gemäss **Figur 14** unterscheidet sich von den vorangehenden Ausführungen gemäss den Figuren 2 bis 13 unter anderem dadurch, dass das Regallager 50.2 als vertikales Umlaufregal mit einer Mehrzahl von vertikal umlaufenden Regalböden 51 ausgebildet ist. Die Regalböden 51 sind durch ein Umlauforgan 59 miteinander verbunden und bewegen sich folglich im Lagerraum 55 des Regallagers 50.2 synchron zueinander in Umlaufrichtung U.

Die umlaufenden Regalböden 51 werden unter anderem an der Übergabeeinrichtung 56 vorbeigeführt. Die umlaufenden Regalböden 51 bewegen sich insbesondere unmittelbar hinter der Übergabeöffnung 53 vertikal an dieser vorbei.

Die Behälterhandhabungsfahrzeuge 20 der Lageranlage 10 sind dazu ausgelegt, die der Lageranlage 10 entnommenen Lagerbehälter 15 durch die Übergabeöffnung 53 hindurch auf einen an der Übergabeöffnung 53 vorbeigeführten Regalboden 51 abzulegen. Der Umlauf der Regalböden 51 kann zwecks Übergabe eines Lagerbehälters 15 vom Behälterhandhabungsfahrzeug 20 verlangsamt oder gestoppt werden, sobald sich der an der Übergabeöffnung 53 vorbeigeführte Regalboden 51 in einer Übernahmeposition befindet.

Der Aufbau des Behälterhandhabungsfahrzeug 20 entspricht jenem in Figur 9. Auf die diesbezügliche Beschreibung zu Figur 9 wird entsprechend verwiesen.

Das Erfassungs- und Haltewerkzeug 21 ist zusammen mit dem Behälteraufnahmeraum 22 dem Grundkörper des Behälterhandhabungsfahrzeugs 20, welcher die Laufrollen 23 aufweist, vorgelagert angeordnet. Zur Übergabe von Artikeln 2 wird das vorgelagerte Erfassungs- und Haltewerkzeug 21 zusammen mit dem Behälteraufnahmeraum 22, in welchem der aus der Lageranlage 10 entnommene Lagerbehälter 15 gehalten wird, durch die Übergabeöffnung 53 in die Übergabeposition bewegt. Der Lagerbehälter 15 wird durch das Erfassungs- und Haltewerkzeug 21 auf dem in einer Übernahmeposition befindlichen Regalboden 51 des Regalumlaufs abgelegt. Eine separate Handlingeinrichtung ist hierzu nicht notwendig.

Da nur das vorgelagerte Erfassungs- und Haltewerkzeug 21 zusammen mit dem Behälteraufnahmeraum 22 und dem darin gehaltenen Lagerbehälter 15 durch die Übergabeöffnung in das Regallager 50.2 bewegt werden und der Grundkörper des Behälterhandhabungsfahrzeugs 20 mit den Laufrollen 23 vor der Übergabeöffnung 53 ausserhalb des Regallagers 50.2 verbleibt, endet das mindestens eine Führungsorgan, insbesondere die Führungsschiene 14, vor dem Regallager 50.1 bzw. vor dessen Übergabeöffnung 53. Entsprechend sind im Regallager 50.2 unmittelbar hinter der Übergabeöffnung 53 keine Installationen der Übergabeeinrichtung vorhanden und der Platz bleibt frei für die umlaufend an der Übergabeöffnung 53 vorbei geführten Regalböden 51.

Die Ausführung gemäss **Figur 15a und 15b** unterscheidet sich von den vorangehenden Ausführungen nach Figur 1 bis 14 durch die Lageranlage 100, welche gemäss dieser Ausführung als Horizontallager 100 ausgebildet ist. Die Lageranlage 100 enthält eine Mehrzahl von übereinander angeordnete Regalebenen 101, welche Lagerplätze zum Einlagern von Artikeln 2 ausbilden.

Jede Regalebene 101 enthält mehrere, voneinander beabstandete, längslaufende Regalreihen 104, welche jeweils eine Ablage, insbesondere eine Ablagefläche zum Ablegen und Einlagern von Artikeln 2 ausbilden. Die Artikel 2 werden in Lagerbehältern 15 untergebracht auf der Ablage abgelegt.

Die Lageranlage 100 weist zwischen den Regalreihen 104 einer Regalebene 101 angeordnete Transportgassen 103 auf, entlang welchen Behälterhandhabungsfahrzeuge 102 Artikel 2 in Lagerbehältern 15 zwecks Einlagerung zu den Regalreihen 104 hin transportieren oder zwecks Auslagerung von den Regalreihen 104 weg transportieren. Die Behälterhandhabungsfahrzeuge 102 sind z. B. schienengeführt.

Die Lageranlage 100 umfasst entsprechend eine Mehrzahl von übereinander und nebeneinander und voneinander beabstandet angeordnete sowie parallel zueinander verlaufende Regalreihen 104 sowie Transportgassen 103. Jeder Transportgasse 103 ist mindestens ein Behälterhandhabungsfahrzeug 102 zugeordnet.

Seitlich von der Lageranlage 101 an den Stirnenden der Transportgassen ist ein Regallager 50.1, 50.2 angeordnet. Das Regallager 50.1, 50.2 kann gemäss einer der in den Figuren 3 bis 14 gezeigten Ausführungsformen ausgebildet sein, jedoch mit dem Unterschied, dass auf der der Lageranlage 100 zugewandten Regalseite mehrere übereinander sowie nebeneinander angeordnete Übergabeeinrichtungen mit entsprechenden Übergabeöffnungen 53 angeordnet sind. Die betreffende Regalseite ist als Regalwand 57 ausgebildet.

Die Übergabeöffnungen 53 an der Regalseite bzw. Regalwand 57 fluchten mit den Transportgassen 103 der Lageranlage 100, so dass die Behälterhandhabungsfahrzeuge 102 der übereinander und nebeneinander angeordneten Transportgassen 103 zwecks Übergabe von Artikeln 2 jeweils horizontal zu einer Übergabeöffnung 53 des Regallagers 50.1, 50.2 bewegbar sind. Entsprechend ist jeder Transportgasse 103 eine Übergabeöffnung 53 zugeordnet.

Die vom Behälterhandhabungsfahrzeuge 102 zur Übergabeöffnung 53 transportierten Artikel 2 werden entsprechend durch die Übergabeöffnungen 53 an das Regallager 50.1, 50.2 übergeben. Die Übergabe der Artikel 2 an das Regallager 50.1, 50.2 kann gemäss einer der in Figur 2 bis 14 offenbarten Verfahren erfolgen. Entsprechend kann auch die Übergabeeinrichtung gemäss einer der in Figur 2 bis 14 offenbarten Ausführungen ausgebildet sein.

## Patentansprüche

1. **Lagersystem** (1) zum Ein- und Auslagern von Artikeln (2), enthaltend:
- eine Lageranlage (10, 100) zum Lagern von Artikeln (2) mit mindestens einer Handhabungsvorrichtung (20, 102) zur Entnahme von Artikeln (2) aus der Lageranlage (10, 100) und zum Transportieren der entnommenen Artikel (2) insbesondere in Lagerbehältern (15) zum Regallager (50.1, 50.2);
- ein Regallager (50.1, 50.2) mit einer Mehrzahl von vertikal übereinander angeordneten Regalböden (51) mit Lagerplätzen (52) zum Ablegen und temporären Lagern von Artikeln (2), welche der Lageranlage (10, 100) entnommen wurden.

2. Lagersystem nach Anspruch 1, **dadurch gekennzeichnet, dass** das Lagersystem (1) mindestens eine Übergabeeinrichtung (56) mit insbesondere einer seitlichen Übergabeöffnung (53) im Regallager (50.1, 50.2) zur seitlichen Übergabe von Artikeln (2) an das Regallager (50.1, 50.2) aufweist, welche mittels der Handhabungsvorrichtung (20, 102) aus der Lageranlage (10, 100) entnommen wurden.

3. Lagersystem nach Anspruch 2, **dadurch gekennzeichnet, dass** die Übergabeeinrichtung (56) eine Übergabezone (3) zur seitlichen Übergabe von Artikeln (2) von der Lageranlage (10, 100) an das Regallager (50.1, 50.2) ausbildet, und die Übergabezone (3) insbesondere:
- ausserhalb des Regallagers (50.1, 50.2), insbesondere unmittelbar vor der seitlichen Übergabeöffnung (53), oder
- innerhalb des Regallagers (50.1, 50.2), insbesondere unmittelbar hinter der seitlichen Übergabeöffnung (53)
angeordnet ist.

4. Lagersystem nach einem der Ansprüche 2 bis 3, **dadurch gekennzeichnet, dass** die Übergabeeinrichtung (56) insbesondere in der Übergabezone (3) eine Übergabeablage (5) zum Ablegen von mindestens einem zu übergebenden Artikel (2) bzw. von mindestens einem Lagerbehälter (15), welcher mindestens einen zu übergebenden Artikel (2) enthält, umfasst.

5. Lagersystem nach einem der Ansprüche 1 bis 4, **dadurch gekennzeichnet, dass** die Lageranlage (10, 100) zur Lagerung der Artikel (2) in Lagerbehältern (15) ausgelegt ist, und die der Lageranlage (10, 100) entnommenen Artikel (2) insbesondere mittels der Handhabungsvorrichtung (20, 102) in den Lagerbehältern (15) zum Regallager (50.1, 50.2) transportierbar sind.

6. Lagersystem nach einem der Ansprüche 1 bis 5, **dadurch gekennzeichnet, dass** die Lageranlage (100) eine Mehrzahl von übereinander angeordneten Regalebenen (101) mit jeweils einer Mehrzahl von nebeneinander angeordneten Regalreihen (104) aufweist, und zwischen den Regalreihen (104) Transportgassen für mindestens eine Handhabungsvorrichtung (102) ausgebildet werden, und die Transportgassen mit, insbesondere seitlichen Übergabeöffnungen (53) am Regallager (50.1, 50.2) fluchten, derart dass die mindestens eine Handhabungsvorrichtung (102) aus den Regalreihen (104) entnommene Artikel (2) entlang der Transportgassen zu den Übergabeöffnungen (53) transportieren kann.

7. Lagersystem nach einem der Ansprüche 1 bis 5, **dadurch gekennzeichnet, dass** die Lageranlage (10) eine Rahmenstruktur (11) enthält, welche eine Mehrzahl von nebeneinander angeordneten Lagersäulen (12) zur Aufnahme von übereinander gestapelten Lagerbehältern (15) ausbildet, und die Handhabungsvorrichtung (20) insbesondere oberhalb der Rahmenstruktur (11) zur Entnahme von Lagerbehältern (15) von oben aus den Lagersäulen (12) angeordnet ist.

8. Lagersystem nach Anspruch 7, **dadurch gekennzeichnet, dass** die Lageranlage (10) eine auf der Rahmenstruktur (11) angeordnete Führungsvorrichtung (13) mit mindestens einem Führungsorgan (14) enthält, und die Handhabungsvorrichtung (20) ein Behälterhandhabungsfahrzeug ist, welches entlang des mindestens einen Führungsorgans (14) auf der Rahmenstruktur (11) zur einer Regalseite, insbesondere zu mindestens einer seitlichen Übergabeöffnung (53) des Regallagers (50.1, 50.2) bewegbar ist.

9. Lagersystem nach einem der Ansprüche 1 bis 8, **dadurch gekennzeichnet, dass** die Handhabungsvorrichtung (20, 102) mindestens teilweise und insbesondere vollständig durch eine Regalseite, insbesondere durch die mindestens eine seitliche Übergabeöffnung (53) seitlich in das Regallager (50.1, 50.2) in eine Übergabeposition bewegbar ist.

10. Lagersystem nach einem der Ansprüche 1 bis 9, **dadurch gekennzeichnet, dass** das Regallager (50.1, 50.2) eine im Lagerraum (55) angeordnete Handlingeinrichtung (70) zum Bewegen von Artikeln (2) innerhalb des Regallagers (50.1, 50.2) enthält.

11. Lagersystem nach Anspruch 10, **dadurch gekennzeichnet, dass** die Handlingeinrichtung (70) zum Bewegen von Artikeln (2) aus einer Übergabezone (3) der Übergabeeinrichtung (56), insbesondere von einer Übergabeablage (5) in der Übergabezone (3), auf einen Lagerplatz (52) eines Regalbodens (51) im Regallager (50.1, 50.2) ausgelegt ist.

12. Lagersystem nach einem der Ansprüche 1 bis 11, **dadurch gekennzeichnet, dass** das Regallager (50.1, 50.2) mindestens einen Lagerlift (60) mit einem vertikal beweglichen Transportorgan (61) zum vertikalen Transportieren von Artikeln (2) zu einer Regalablage (58) hin und von der Regalablage (58) weg enthält, und die Handlingeinrichtung (70) insbesondere am Lagerlift (60) bzw. Transportorgan (61) angeordnet ist.

13. Lagersystem nach einem der Ansprüche 1 bis 18, **dadurch gekennzeichnet, dass** das Regallager (50.1, 50.2) ein vertikales Umlaufregal mit einer Mehrzahl von vertikal umlaufenden Regalböden (51) ist.

14. Lagersystem nach einem der Ansprüche 1 bis 13, **dadurch gekennzeichnet, dass** das Lagersystem (1) dazu ausgelegt ist, insbesondere mittels der Handhabungsvorrichtung (20, 102), Lagerbehälter (15) mit darin enthaltenen Artikeln (2) der Lageranlage (10, 100) zu entnehmen und, insbesondere mittels der Handlingeinrichtung (70), einzelne Artikel (2) aus den Lagerbehältern (15) zu entnehmen und auf Regalböden (51) des Regallagers (50.1, 50.2) abzulegen.

15. **Verfahren** zum Auslagern von Artikeln (2) aus einem Lagersystem (1) nach einem der Ansprüche 1 bis 14, **gekennzeichnet durch** die folgenden Schritte:
- Entnahme mindestens eines Artikels (2) aus der Lageranlage (10, 100) mittels der Handhabungsvorrichtung (20, 102);
- Transportieren des mindestens einen Artikels (2) insbesondere in einem Lagerbehälter (15) zur Übergabeeinrichtung (56);
- seitliches Übergeben des mindestens einen Artikels (2) durch eine Regalseite, insbesondere durch eine seitliche Übergabeöffnung (53) an das Regallager (50.1, 50.2);
- Ablegen des mindestens einen Artikels (2) auf einem Regalboden (51) des Regallagers (50.1, 50.2).
